# EUROPÄISCHE PATENTANMELDUNG

(11) **EP 2 131 433 A1**
(43) Veröffentlichungstag der Anmeldung: **09.12.2009**
(21) Anmeldenummer: 08010251.0
(22) Anmeldetag: 05.06.2008
(51) Int. Cl.: H01M 8/02

(54) **Elektrochemische Zelle und Verfahren zur ihrer Herstellung**

(71) Anmelder: REINZ-Dichtungs-GmbH, 89233 Neu-Ulm (DE); BASF SE, 67056 Ludwigshafen (DE)
(72) Erfinder: Schmidt, Thomas, Dr., 65456 Mörfelden-Walldorf (DE); Scherer, Joachim, Dr., 89075 Ulm (DE); Ströbel, Raimund, Dr., 89077 Ulm (DE)
(74) Vertreter: Luderschmidt, Schüler & Partner

(57) **Zusammenfassung**

Die vorliegende Erfindung betrifft ein neues Verfahren zur Herstellung von elektrochemischen Zellen, insbesondere Brennstoffzellen-Einzelzellen und Stacks, sowie hierfür benötigte Komponenten und Halbzeuge. Durch konstruktive Maßnahmen wird die Gasdiffusionsschicht auf der Bipolarplatte fixiert und somit eine verbesserte Positionierung der einzelnen Komponenten einer elektrochemischen Zelle, insbesondere einer Brennstoffzellen-Einzelzelle, erreicht. Das erfindungsgemäße Verfahren erlaubt eine flexible Produktion. Die erfindungsgemäßen Halbzeuge sind wertvolle, lagerfähige Zwischenprodukte, welche die Vorlaufzeiten bei der Fertigung von elektrochemischen Zellen, insbesondere Brennstoffzellen-Einzelzellen, deutlich reduzieren.

## Beschreibung

Die vorliegende Erfindung betrifft ein neues Verfahren zur Herstellung von elektrochemischen Zellen, insbesondere für Elektrolyseure, elektrochemische Verdichter und Brennstoffzellen-Einzelzellen und Stacks, sowie hierfür benötigte Komponenten und Halbzeuge.

Elektrochemischen Zellen, insbesondere Brennstoffzellen sind seit langem bekannt und stellen eine umweltverträgliche Quelle für elektrische Energie und Wärme dar. Obwohl die Entwicklung von Brennstoffzellen bereits fortgeschritten ist und erste Prototypen und Kleinserien im Markt erhältlich sind, stellt die Fertigung von Brennstoffzellen, insbesondere von Brennstoffzellen-Einzelzellen und Stacks, noch eine große Herausforderung dar. Die derzeit gewählten Fertigungsmethoden sind für die Markteinführung geeignet, allerdings für die Massenproduktion noch zu verbessern, insbesondere um die angestrebten Kostenziele zu erreichen. Aufgrund des komplexen Multi-Paramentersystems Brennstoffzelle sind die benötigten Komponenten und deren Fertigung genau aufeinander Abzustimmen.

In Polymer-Elektrolyt-Membran(PEM)-Brennstoffzellen werden heute als protonenleitende Membranen fast ausschließlich sulfonsäuremodifizierte Polymere eingesetzt. Dabei finden überwiegend perfluorierte Polymere Anwendung. Prominentes Beispiel hierfür ist Nafion™ von DuPont de Nemours, Willmington USA. Für die Protonenleitung ist ein relativ hoher Wassergehalt in der Membran erforderlich, der typischerweise bei 4 - 20 Molekülen Wasser pro Sulfonsäuregruppe liegt. Der notwendige Wassergehalt, aber auch die Stabilität des Polymers in Verbindung mit saurem Wasser und den Reaktionsgasen Wasserstoff und Sauerstoff, limitiert die Betriebstemperatur der PEM-Brennstoffzellenstacks auf 80 - 100 °C. Höhere Betriebstemperaturen können ohne einen Verlust an Leistung der Brennstoffzelle nicht realisiert werden. Bei Temperaturen, die für ein gegebenes Druckniveau, oberhalb des Taupunktes von Wasser liegen, trocknet die Membran komplett aus, und die Brennstoffzelle liefert keine elektrische Energie mehr, da der Widerstand der Membran auf so hohe Werte steigt, dass kein nennenswerter Stromfluß mehr erfolgt.

Eine Membran-Elektroden-Einheit, die auf der zuvor dargelegten Technologie beruht, wird beispielsweise in US 5,464,700 beschrieben. Aus systemtechnischen Gründen sind aber höhere Betriebstemperaturen als 100 °C in der Brennstoffzelle wünschenswert. Die Aktivität der in der Membran-Elektroden-Einheit (MEE) enthaltenen Katalysatoren auf Edelmetallbasis ist bei hohen Betriebstemperaturen wesentlich besser.

Insbesondere bei der Verwendung von so genannten Reformaten aus Kohlenwasserstoffen sind im Reformergas deutliche Mengen an Kohlenmonoxid enthalten, die üblicherweise durch eine aufwendige Gasaufbereitung bzw. Gasreinigung entfernt werden müssen. Bei hohen Betriebstemperaturen steigt die Toleranz der Katalysatoren gegenüber den CO-Verunreinigungen.

Des Weiteren entsteht Wärme beim Betrieb von Brennstoffzellen. Eine Kühlung dieser Systeme auf unter 80°C kann jedoch sehr aufwendig sein. Je nach Leistungsabgabe können die Kühlvorrichtungen wesentlich einfacher gestaltet werden. Das bedeutet, dass die in Brennstoffzellensystemen, die bei Temperaturen über 100°C betrieben werden, die Abwärme deutlich besser nutzbar gemacht und somit die Brennstoffzellensystem-Effizienz gesteigert werden kann.

Um diese Temperaturen zu erreichen, werden im Allgemeinen Membranen mit neuen Leitfähigkeitsmechanismen verwendet. Ein Ansatz hierfür ist der Einsatz von Membranen, die ohne den Einsatz von Wasser eine ionische Leitfähigkeit zeigen. Die erste Erfolg versprechende Entwicklung in diese Richtung ist in der Schrift WO96/13872 dargelegt.

Weitere Hochtemperatur-Brennstoffzellen werden in JP-A-2001-196082 und DE 10235360 offenbart, wobei insbesondere die Dichtungssysteme der Elektroden-Membran-Einheit untersucht werden.

Zur Fertigung einer Brennstoffzellen-Einzelzelle bzw. eines Stacks, werden - die zuvor genannten Membran-Elektroden-Einheiten - im Allgemeinen mit planaren Bipolarplatten verbunden, in die Kanäle für einen Gasstrom eingefräst sind.

Bipolarplatten mit integrierten Medienkanälen zur Fertigung von Brennstoffzellen-Einzelzellen bzw. Stacks sind bereits seit langem bekannt. Beim Einbau der Bipolarplatten ist es jedoch wichtig für eine ausreichende Gas-/Mediendichtheit zu sorgen. Hierzu werden die Bipolarplatten mittels Dichtungen zur Rückseite der Gasdiffusionslage bzw. Gasdiffusionselektrode abgedichtet (vgl. DE 10 2005 046461) oder mit speziellen Rahmen versehen (vgl. EP-A-1437780).

Ein weiterer Ansatz zur Dichtung der Bipolarplatte zur Gasdiffusionslage bzw. Gasdiffusionselektrode besteht darin, Teile der Bipolarplatte bereits konstruktiv als Dichtung auszugestalten (vgl. EP-A-1612877 sowie EP-A-0774794) oder die Dichtung integral mit der Gasdiffusionsschicht auszugestalten. Eine derartige Lösung ist in der EP-A-1296394 beschrieben. Flüssiges Dichtungsmaterial durchdringt dabei den Randbereich der Gasdiffusionsschicht und verfestigt sich in einem anschließenden Schritt.

Dennoch ist es aufgrund der größeren Dicke der Membran- Elektroden-Einheiten teilweise noch notwendig zwischen der Bipolarplatte und der Membran-Elektroden-Einheit die zuvor beschriebenen Dichtungen mit einer weiteren Dichtung zu versehen. Die zwischen der Membran-Elektroden-Einheiten und den Bipolarplatten eingelegte Flachdichtung bzw. Dichtungsfolie wird üblicherweise aus PTFE hergestellt. Bei der anschließenden Fertigung der Brennstoffzellen-Einzelzelle bzw. des Stacks werden die Anordnungen gegeneinander verschraubt und somit abgedichtet.

Es hat sich gezeigt, dass diese Methoden der Fertigung, insbesondere bei der Kompression der Bipolarplatte und der fertigen Membran-Elektroden Einheit, zu Problemen führt. Durch die unterschiedliche Kompressibilität der Materialien bzw. unterschiedliche Toleranzen, werden Undichtigkeiten registriert, die auch durch die üblichen Flachdichtungen nicht kompensiert werden können. Zusätzlich beinhaltet eine Fertigung nach dem vorstehend genannten Prinzip das Handling von vielen geometrischen Lagen bzw. Schichten und deren Positionierung zueinander. Hierzu werden als Hilfsmaßnahmen so genannte Positionierungshilfen bzw. Justierhilfen verwendet, welche die Fertigung aufwendiger - und somit teurer - gestalten. Generell beinhaltet die Fertigung der Membran-Elektroden Einheit nach dem Stand der Technik, auf Grund der dafür nötigen Positionierungshilfen einen erhöhten Materialeinsatz an Membran, GDE/GDL und ggf. die Membran einfassenden Polymerfolien. Der zusätzliche, ausschließlich prozessbedingte, Einsatz der zumeist kostenintensiven Materialien führt zu einer deutlichen Verteuerung der Membran-Elektroden Einheit.

Es wurde nun festgestellt, dass die vorstehenden Probleme vermieden werden können, wenn die Fertigung nicht mittels Kompression der Bipolarplatte und der fertigen Membran-Elektroden Einheit sondern ausgehend von einer in der Bipolarplatte eingesetzten bzw. fixierten Gasdiffusionslage bzw. Elektrode erfolgt. Die Fixierung der Gasdiffusionslage bzw. Elektrode minimiert die so genannte Lagentoleranz und erlaubt es auf aufwendige Hilfsmittel, wie Positionierungshilfen bzw. Justierhilfen, - zumindest teilweise - zu verzichten. Des Weiteren kann die Fertigung wesentlich einfacher gestaltet werden, da notwendige Komponenten auch in Form von Rollenwaren zugeführt werden können.

Gelöst wird diese und auch weitere nicht explizit genannte Aufgabe(n) durch das Verfahren gemäß Anspruch 1.

Gegenstand der vorliegenden Erfindung ist dementsprechend ein Verfahren zur Herstellung einer elektrochemischen Zelle, insbesondere einer Brennstoffzellen-Einzelzelle und/oder eines Brennstoffzellen-Stacks, enthaltend
(i) mindestens eine protonenleitende Polymerelektrolytmembran (1) oder Elektrolytmatrix (1),
(ii) mindestens eine Katalysatorschicht, die sich jeweils auf beiden Seiten der protonenleitende Polymerelektrolytmembran oder Elektrolytmatrix befindet,
(iii) mindestens eine elektrisch leitfähige Gasdiffusionsschicht (2), die sich jeweils auf der dem Elektrolyten abgewandten Seite der Katalysatorschicht befindet,
(iv) mindestens eine Bipolarplatte mit integrierten Medienkanälen (3), die sich jeweils auf der zur Katalysatorschicht abgewandten Seiten der Gasdiffusionsschicht befindet,
(v) mindestens ein umlaufendes Konstruktionselement (4) im Randbereich der Gasdiffusionsschicht zur Bipolarplatte,
umfassend die folgenden Schritte:
a) Zuführen einer mit Medienkanälen versehenen Bipolarplatte,
b) Zuführen einer Gasdiffusionsschicht oder einer Gasdiffusionsschicht, die auf der der Bipolarplatte abgewandten Seite mindestens eine Katalysatorschicht aufweist und Ablage der Gasdiffusionsschicht auf dem mit den Medienkanälen versehenen Teil der Bipolarplatte, so dass die Medienkanäle vollständig mit der Gasdiffusionsschicht abgedeckt sind,
c) Erzeugen bzw. Anbringen eines umlaufenden Konstruktionselements auf dem Rand bzw. Randbereich der Bipolarplatte,
d) Zuführen und Ablage einer protonenleitenden Polymerelektrolytmembran oder Elektrolytmatrix auf der Oberfläche der Gasdiffusionsschicht bzw. auf der auf der Gasdiffusionsschicht angebrachten Katalysatorschicht
e) Verpressen des gemäß Schritt d) erhaltenen Bauteils mit einem weiteren Bauteil, welches eine Bipolarplatte, eine Gasdiffusionsschicht, ggf. eine Katalysatorschicht und ein umlaufendes Konstruktionselement im Randbereich der Bipolarplatte aufweist und ebenfalls gemäß den Schritten a), b) und c) hergestellt wurde,
**dadurch gekennzeichnet, dass** das gemäß Schritt c) erzeugte bzw. angebrachte umlaufende Konstruktionselement (4) im konstruktiven inneren Randbereich übersteht und den äußeren Randbereich der Gasdiffusionsschicht (2) bzw. der mit einer Katalysatorschicht versehenen Gasdiffusionsschicht (2) überlappt und dieselbe in der Aussparung (5), welche die Form eines Hinterschnittes hat und durch das umlaufend angebrachte, im inneren Randbereich überstehende, Konstruktionselement (4) und die Bipolarplatte (3) gebildet wird, fixiert.

Mit Hilfe des erfindungsgemäßen Verfahrens hergestellte elektrochemische Zellen, insbesondere Brennstoffzellen-Einzelzellen, sind einfacher zu fertigen. Durch die Fixierung der Gasdiffusionsschicht bzw. der mit einer Katalysatorschicht versehenen Gasdiffusionsschicht an der Bipolarplatte sind geringere Toleranzen in der Fertigung möglich. Die aufwendige Positionierung der einzelnen Komponenten nacheinander und aufeinander bei der Herstellung einer mehrlagigen Membran-Elektroden-Einheit und sich daraus ergebende Abweichungen/Verschiebungen werden vermieden, so dass homogenere Produktverteilungen bzw. Toleranzen erreicht werden. Insbesondere können die benötigen Komponenten in Rollenform zugeführt und verarbeitet werden. Hierzu werden die einzelnen, rollenförmigen Komponenten für das jeweilige Bipolarplattendesign konfektioniert, d.h. zugeschnitten, und anschließend gemäß Schritt d) zugeführt. Durch den Einsatz von universellen, rollenförmigen Gütern wird die Fertigung vereinfacht, der Materialeinsatz minimiert und durch die verringere Komplexität der Membran-Elektroden-Einheit kostengünstiger ermöglicht.

Mittels des erfindungsgemäßen Verfahrens werden vorgefertigte Halbzeuge aus Bipolarplatte und Gasdiffusionsschicht miteinander verpresst, bei denen die jeweiligen Komponenten gegeneinander ausgerichtet und fixiert vorliegen. Die Membran oder die Membran-Elektroden-Einheit kann dann als Zuschnitt aus Rollenware oder bereits fertig vorkonfektioniert zugeführt werden.

Das erfindungsgemäße Verfahren erlaubt es ebenfalls Halbzeuge bzw. vorgefertigte Komponenten zu fertigen und ggf. auf Lager zu legen. Somit können Schwankungen der Nachfrage besser kompensiert werden und eine flexiblere Produktion mit geringeren Vorlaufzeiten ermöglicht werden.

Bei den erfindungsgemäß eingesetzten, umlaufenden Konstruktionselementen auf dem Rand bzw. dem Randbereich der Bipolarplatte, handelt es sich um ein rahmenförmiges Bauteil, welches die Gasdiffusionsschicht (2) bzw. die mit einer Katalysatorschicht versehene Gasdiffusionsschicht (2) zumindest teilweise überlappt und die Gasdiffusionsschicht in der durch die Bipolarplatte (3) und das umlaufende, rahmenförmige Bauteil (4) gebildeten Aussparung (5), welche die Form eines Hinterschnittes hat, horizontal und vertikal fixiert. Die Fixierung bewirkt, dass die Gasdiffusionsschicht in einer definierten Position auf der Bipolarplatte vorliegt und bei den nachfolgenden Fertigungsschritten nicht mehr verschoben wird.
Ein möglicher nachfolgender Fertigungsschritt umfasst das Zuführen und Auflegen der Membran oder der Membran-Elektroden-Einheit. Diese kann als einfacher Zuschnitt aus Rollenware vorliegen.

Das erfindungsgemäß eingesetzte rahmenförmige Bauteil wird bevorzugt aus einem Dichtungsmaterial, insbesondere auf Basis von Polymeren, oder aber aus einem - zum Bipolarplattenmaterial kompatiblen - Material, insbesondere aus dem gleichen Material wie die Bipolarplatte, gebildet. Kompatible Materialien im Sinne der vorliegenden Erfindung sind alle Materialien, welche, verarbeitet zu einem rahmenförmigen Bauteil, eine horizontale und/oder vertikale Fixierung der Gasdiffusionsschicht in der Aussparung gewährleisten. Zusätzlich müssen derartige, kompatiblen, Materialien für den Einsatz in elektrochemischen Zellen geeignet sein.

Insofern ein Dichtungsmaterial als umlaufendes Konstruktionselement (4) eingesetzt wird bzw. diese auf dem Rand/Randbereich der Bipolarplatte gebildet wird, umfasst das erfindungsgemäße Verfahren die Schritte:
a) Zuführen einer mit Medienkanälen versehenen Bipolarplatte, wobei die zugeführte Bipolarplatte vorzugsweise einen umlaufenden und gegenüber dem flächigen Bereich der Bipolarplatte, welcher die Medienkanäle aufweist, erhöhten Rand aufweist, und die Oberfläche des umlaufenden, erhöhten Rands und die Oberfläche des flächigen Bereiches der Bipolarplatte mit den Medienkanälen im wesentlichen parallel zueinander angeordnet sind,
b) Zuführen einer Gasdiffusionsschicht oder einer Gasdiffusionsschicht, die auf der der Bipolarplatte abgewandten Seite mindestens eine Katalysatorschicht aufweist und Ablage der Gasdiffusionsschicht auf dem mit den Medienkanälen versehenen Teil der Bipolarplatte, so dass die Medienkanäle vollständig mit der Gasdiffusionsschicht abgedeckt sind,
c) Erzeugen bzw. Anbringen einer umlaufenden Dichtung auf dem Rand bzw. dem Randbereich der Bipolarplatte,
d) Zuführen und Ablage einer protonenleitenden Polymerelektrolytmembran oder Elektrolytmatrix auf der Oberfläche der Gasdiffusionsschicht bzw. auf der auf der Gasdiffusionsschicht angebrachten Katalysatorschicht,
e) Verpressen des gemäß Schritt d) erhaltenen Bauteils mit einem weiteren Bauteil, welches eine Bipolarplatte, eine Gasdiffusionsschicht, eine Katalysatorschicht und eine umlaufende Dichtung aufweist und ebenfalls gemäß den Schritten a), b) und c) hergestellt wurde,
**dadurch gekennzeichnet, dass** die gemäß Schritt c) erzeugte bzw. angebrachte umlaufende Dichtung (4) im konstruktiven inneren Randbereich übersteht und den äußeren Randbereich der Gasdiffusionsschicht (2) bzw. der mit einer Katalysatorschicht versehenen Gasdiffusionsschicht (2) überlappt und dieselbe in der Aussparung (5), welche die Form eines Hinterschnittes hat und durch die umlaufende angebrachte, im inneren Randbereich überstehende, Dichtung (4) und die Bipolarplatte (3) gebildet wird, fixiert.

Je nach gewähltem Dichtungsmaterial kann es vorteilhaft sein, wenn die eingesetzte Bipolarplatte (3) einen umlaufenden und gegenüber dem flächigen Bereich der Bipolarplatte, welcher die Medienkanäle aufweist, erhöhten Rand (3a) aufweist. Mit dieser Maßnahme kann einerseits Dichtungsmaterial eingespart werden und andererseits auch ein relativ dünnes Dichtungsmaterial, beispielsweise eine gedruckte Dichtung, eingesetzt werden. Auch bei Einsatz von Dichtungsmaterial mit einem hohen Druckverformungsrest kann ein erhöhter Rand von Vorteil sein, z.B. der Kontrolle der Kompressibilität bei der Fertigung.

Insofern als umlaufendes Konstruktionselement (4) ein rahmenförmiges Bauteil eingesetzt wird, umfasst das erfindungsgemäße Verfahren die Schritte:
a) Zuführen einer mit Medienkanälen versehenen Bipolarplatte, wobei die zugeführte Bipolarplatte gegebenenfalls einen umlaufenden und gegenüber dem flächigen Bereich der Bipolarplatte, welcher die Medienkanäle aufweist, erhöhten Rand aufweist, und die Oberfläche des umlaufenden, erhöhten Rands und die Oberfläche des flächigen Bereiches der Bipolarplatte mit den Medienkanälen im wesentlichen parallel zueinander angeordnet sind,
b) Zuführen einer Gasdiffusionsschicht oder einer Gasdiffusionsschicht, die auf der der Bipolarplatte abgewandten Seite mindestens eine Katalysatorschicht aufweist und Ablage der Gasdiffusionsschicht auf dem mit den Medienkanälen versehenen Teil der Bipolarplatte, so dass die Medienkanäle vollständig mit der Gasdiffusionsschicht abgedeckt sind,
c) Anbringen eines umlaufenden, rahmenförmigen Bauteils (3a) auf dem Rand bzw. dem Randbereich der Bipolarplatte,
d) Erzeugen bzw. Anbringen einer umlaufenden Dichtung (4) auf dem Rand bzw. dem Randbereich des umlaufenden, rahmenförmigen Bauteils (3a) aus Schritt c),
e) Zuführen und Ablage einer protonenleitenden Polymerelektrolytmembran (1) oder Elektrolytmatrix (1) auf der Oberfläche der Gasdiffusionsschicht (2) bzw. auf der auf der Gasdiffusionsschicht angebrachten Katalysatorschicht (2),
f) Verpressen des gemäß Schritt e) erhaltenen Bauteils mit einem weiteren Bauteil, welches eine Bipolarplatte, eine Gasdiffusionsschicht, eine Katalysatorschicht und ein umlaufendes, rahmenförmiges Bauteil aufweist und ebenfalls gemäß den Schritten a), b), c) und d) hergestellt wurde,
**dadurch gekennzeichnet, dass** das gemäß Schritt c) angebrachte umlaufende, rahmenförmige Bauteil (3a) im konstruktiven inneren Randbereich übersteht und den äußeren Randbereich der Gasdiffusionsschicht (2) bzw. der mit einer Katalysatorschicht versehenen Gasdiffusionsschicht (2) überlappt und dieselbe in der Aussparung (5), welche die Form eines Hinterschnittes hat und durch das umlaufende, rahmenförmige, im inneren Randbereich überstehende Bauteil (3a) und die Bipolarplatte (3) gebildet wird, fixiert.

In einer bevorzugten Ausführungsform der Erfindung besitzt die gemäß Schritt c) bzw. d) erzeugte bzw. angebrachte Dichtung (4) im inneren Randbereich eine Vertiefung (4a) zur Aufnahme der protonenleitenden Polymerelektrolytmembran (1) oder Elektrolytmatrix (1).

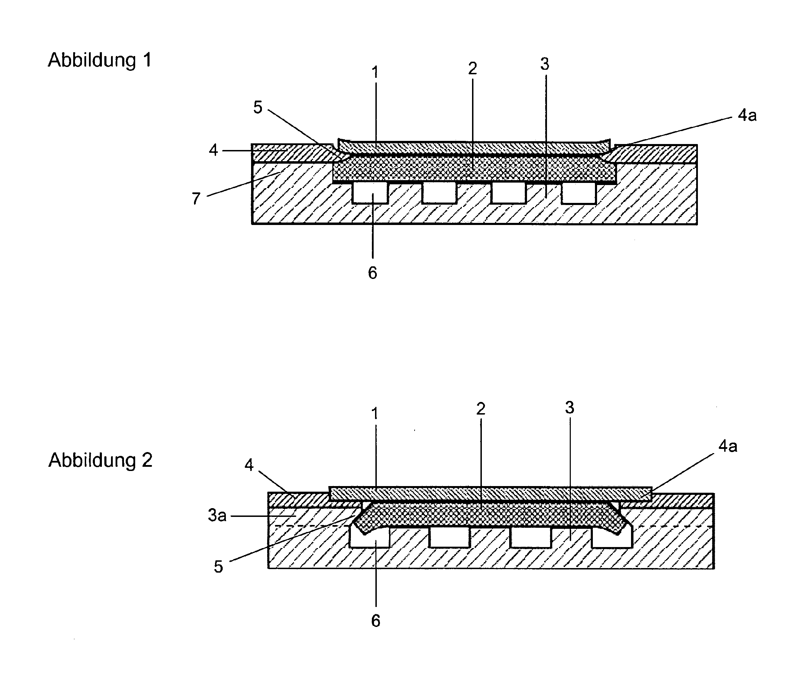

Je nach Beschaffenheit der eingesetzten protonenleitenden Polymerelektrolytmembran bzw. Elektrolytmatrix lässt sich über die Dicke des umlaufenden Konstruktionselements bzw. der Dichtung und deren Kompressibilität eine sogenannte "Hard-Stop" Funktion einbauen. Hierdurch wird der Grad an Kompressibilität der protonenleitenden Polymerelektrolytmembran bzw. Elektrolytmatrix und der Gasdiffusionsschicht bei der Verpressung eingestellt, so dass eine Schädigung der protonenleitenden Polymerelektrolytmembran bzw. Elektrolytmatrix durch zu starke Kompression vermieden wird (vgl. Abbildung 2).

Insofern bei dem erfindungsgemäßen Verfahren eine Gasdiffusionsschicht ohne Katalysatorschicht eingesetzt wird ist es von Vorteil eine protonenleitende Polymerelektrolytmembran bzw. Elektrolytmatrix einzusetzen, die bereits mindestens eine Katalysatorschicht aufweist. Dabei handelt es sich um sogenannte "catalyst coated membranes", beispielsweise auf Basis von Nafion^{®}.

Insofern die Bipolarplatte einen erhöhten Rand aufweist, ist es von Vorteil, wenn die Oberfläche des umlaufenden, erhöhten Rands und die Oberfläche des flächigen Bereiches der Bipolarplatte mit den Medienkanälen im Wesentlichen parallel zueinander angeordnet sind.

Die mittels des erfindungsgemäßen Verfahrens hergestellten elektrochemischen Zellen, insbesondere Brennstoffzellen-Einzelzellen, bei denen die Bipolarplatte einen Rahmen bzw. Konstruktionselemente aufweist, die im inneren Randbereich konstruktiv nach innen überstehen und mit dem äußeren Randbereich der Gasdiffusionsschicht überlappen und diese fixieren, sind aus dem Stand der Technik nicht bekannt. Diese sind ebenfalls Gegenstand der vorliegenden Erfindung.

Gegenstand der vorliegenden Erfindung ist dementsprechend eine elektrochemische Zelle, insbesondere eine Brennstoffzellen-Einzelzelle, enthaltend
(i) mindestens eine protonenleitende Polymerelektrolytmembran (1) oder Elektrolytmatrix (1),
(ii) mindestens eine Katalysatorschicht, die sich jeweils auf beiden Seiten der protonenleitende Polymerelektrolytmembran oder Elektrolytmatrix befindet,
(iii) mindestens eine elektrisch leitfähige Gasdiffusionsschicht (2), die sich jeweils auf der dem Elektrolyten abgewandten Seite der Katalysatorschicht befindet,
(iv) mindestens eine Bipolarplatte mit integrierten Medienkanälen (3), die sich jeweils auf der zur Katalysatorschicht abgewandten Seite der Gasdiffusionsschicht befinden,
(v) mindestens ein umlaufendes Konstruktionselement (4) im Randbereich der Gasdiffusionsschicht zur Bipolarplatte,
**dadurch gekennzeichnet, dass** das Konstruktionselement (4; 3a) im konstruktiven inneren Randbereich übersteht (5) und den äußeren Randbereich der Gasdiffusionsschicht (2) bzw. der mit einer Katalysatorschicht versehenen Gasdiffusionsschicht abdeckt und diese in der Aussparung (5), welche die Form eines Hinterschnittes hat und durch das umlaufende Konstruktionselement (4; 3a) und die Bipolarplatte gebildet wird, fixiert.

Weiterer Gegenstand der vorliegenden Erfindung sind neuartige Halbzeuge und Komponenten, die im erfindungsgemäßen Verfahren eingesetzt werden.

Diese Halbzeuge sind ebenfalls Gegenstand der vorliegenden Erfindung und umfassen:
I) mindestens eine Bipolarplatte mit integrierten Medienkanälen (3) und
II) mindestens eine elektrisch leitfähige Gasdiffusionsschicht (2), welche die Medienkanäle der Bipolarplatte (3) vollständig abdeckt,
III) wobei die Bipolarplatte (3) sich jeweils auf der zur Katalysatorschicht abgewandten Seite der Gasdiffusionsschicht (2) befindet
**dadurch gekennzeichnet, dass** die Bipolarplatte (3) ein im Randbereich umlaufendes Konstruktionselement (4; 3a) aufweist, das im konstruktiven inneren Randbereich übersteht (5) und den äußeren Randbereich der Gasdiffusionsschicht (2) bzw. der mit einer Katalysatorschicht versehenen Gasdiffusionsschicht überlappt und diese in der Aussparung (5), welche die Form eines Hinterschnittes hat und durch das umlaufende Konstruktionselement (4; 3a) und die Bipolarplatte gebildet wird, fixiert.

In einer weiteren Ausführungsform der erfindungsgemäßen Halbzeuge weist das umlaufende Konstruktionselement (4) oder die Dichtung (4) im inneren Bereich eine Vertiefung (4a) zur Aufnahme der Polymerelektrolytmembran (1) bzw. Elektrolytmatrix (1) auf. Je nach Beschaffenheit der Polymerelektrolytmembran (1) bzw. Elektrolytmatrix (1) kann über das Ausmaß der Vertiefung die Kompressibilität der Polymerelektrolytmembran (1) bzw. Elektrolytmatrix (1) mit beeinflusst werden. Werden relativ weiche Polymerelektrolytmembranen (1) bzw. Elektrolytmatrices (1) eingesetzt, so ist es von Vorteil, die Vertiefung (4a) so auszugestallten, dass die Polymerelektrolytmembran (1) bzw. Elektrolytmatrix (1) eine Kompression von mindestens 3% erfahren kann. In diesem Fall steht die Polymerelektrolytmembran (1) bzw. Elektrolytmatrix (1) in dem Maß aus der Vertiefung hervor in welchem sie verpresst werden soll. Besonders bevorzugt wird die vorstehend beschriebene Vertiefung so gewählt, dass die Kompression mindestens 5% beträgt. Als Obergrenze wird mithin eine Kompression von mehr als 80%, insbesondere von mehr als 30%, gewählt, wobei die Gasdichtigkeit der Polymerelektrolytmembran (1) bzw. Elektrolytmatrix (1) gewährleistet bleiben muss. Diese Ausführungsform ist insbesondere für Polymerelektrolytmembranen geeignet, bei denen die protonenleitende Polymerelektrolytmembran Säuren umfasst, die durch ionische Wechselwirkung an Polymere gebunden sind.

Die ausführliche Beschreibung der erfindungsgemäßen Gegenstände ist nachfolgend aufgezeigt und die jeweils bevorzugten Ausführungsformen sind miteinander frei kombinierbar um unnötige Wiederholungen zu vermeiden. Protonenleitende Polymer-Elektrolyt-Membranen und Matrices Für die Zwecke der vorliegenden Erfindung geeignete Polymer-Elektrolyt-Membranen bzw. Elektrolytmatrices sind an sich bekannt.

Neben den bekannten Polymerelektrolytmembranen sind auch Elektrolytmatrices geeignet. Unter dem Begriff Elektrolytmatrices im Sinne der vorliegenden Erfindung werden neben Polymerelektrolytmatrices auch andere Matrixmaterialien verstanden bei denen ein ionenleitendes Material oder Gemisch in einer Matrix fixiert bzw. immobilisiert wird. Beispielhaft sei hier eine Matrix aus SiC und Phosphorsäure genannt.

Im Allgemeinen werden Polymerelektrolytmembranen eingesetzt, die Säuren umfassen, wobei die Säuren kovalent an Polymere gebunden sein können. Des Weiteren kann ein flächiges Material mit einer Säure dotiert werden, um eine geeignete Membran zu bilden.

Diese dotierten Membranen können unter anderem durch Quellen von flächigen Materialen, beispielsweise einer Polymerfolie, mit einer Flüssigkeit, die säurehaltige Verbindungen umfasst, oder durch Herstellung einer Mischung von Polymeren und säurehaltigen Verbindungen und anschließendes Bilden einer Membran durch Formen eines flächigen Gegenstandes und anschließender Verfestigung, um eine Membran zu bilden, erzeugt werden.

Zu den hierfür geeigneten Polymeren gehören unter anderem Polyolefine, wie Poly(chloropren), Polyacetylen, Polyphenylen, Poly(p-xylylen), Polyarylmethylen, Polystyrol, Polymethylstyrol, Polyvinylalkohol, Polyvinylacetat, Polyvinylether, Polyvinylamin, Poly(N-vinylacetamid), Polyvinylimidazol, Polyvinylcarbazol, Polyvinylpyrrolidon, Polyvinylpyridin, Polyvinylchlorid, Polyvinylidenchlorid, Polytetrafluorethylen, Polyhexafluorpropylen, Copolymere von PTFE mit Hexafluoropropylen, mit Perfluorpropylvinylether, mit Trifluoronitrosomethan, mit Carbalkoxy-perfluoralkoxyvinylether, Polychlortrifluorethylen, Polyvinylfluorid, Polyvinylidenfluorid, Polyacrolein, Polyacrylamid, Polyacrylnitril, Polycyanacrylate, Polymethacrylimid, Cycloolefinische Copolymere, insbesondere aus Norbornen; Polymere mit C-O-Bindungen in der Hauptkette, beispielsweise Polyacetal, Polyoxymethylen, Polyether, Polypropylenoxid, Polyepichlorhydrin, Polytetrahydrofuran, Polyphenylenoxid, Polyetherketon, Polyester, insbesondere Polyhydroxyessigsäure, Polyethylenterephthalat, Polybutylenterephthalat, Polyhydroxybenzoat, Polyhydroxypropionsäure, Polypivalolacton, Polycaprolacton, Polymalonsäure, Polycarbonat; Polymere C-S-Bindungen in der Hauptkette, beispielsweise Polysulfidether, Polyphenylensulfid, Polysulfone Polyethersulfon; Polymere C-N-Bindungen in der Hauptkette, beispielsweise Polyimine, Polyisocyanide,Polyetherimin, Polyetherimide, Polyanilin, Polyaramide, Polyamide, Polyhydrazide, Polyurethane, Polyimide, Polyazole, Polyazoletherketon, Polyazine; Flüssigkristalline Polymere, insbesondere Vectra sowie Anorganische Polymere, beispielsweise Polysilane, Polycarbosilane, Polysiloxane, Polykieselsäure, Polysilikate, Silicone, Polyphosphazene und Polythiazyl.

Hierbei sind basische Polymere bevorzugt, wobei dies insbesondere für Membranen gilt, die mit Säuren dotiert sind. Als mit Säure dotierte basische Polymermembranen kommen nahezu alle bekannten Polymermembranen in Betracht, bei denen die Protonen transportiert werden können. Hierbei sind Säuren bevorzugt, die Protonen ohne zusätzliches Wasser, z.B. mittels des so genannten "Grotthus Mechanismus", befördern können.

Als basisches Polymer im Sinne der vorliegenden Erfindung wird vorzugsweise ein basisches Polymer mit mindestens einem Stickstoffatom in einer Wiederholungseinheit verwendet.

Die Wiederholungseinheit im basischen Polymer enthält gemäß einer bevorzugten Ausführungsform einen aromatischen Ring mit mindestens einem Stickstoffatom. Bei dem aromatischen Ring handelt es sich vorzugsweise um einen fünf- oder sechsgliedrigen Ring mit eins bis drei Stickstoffatomen, der mit einem anderen Ring, insbesondere einem anderen aromatischen Ring, anelliert sein kann.

Gemäß einem besonderen Aspekt der vorliegenden Erfindung werden hochtemperaturstabile Polymere eingesetzt, die mindestens ein Stickstoff-, Sauerstoff- und/oder Schwefelatom in einer oder in unterschiedlichen Wiederholungseinheiten enthalten.

Hochtemperaturstabil im Sinne der vorliegenden Erfindung ist ein Polymer, welches als Polymerer Elektrolyt in einer Brennstoffzelle bei Temperaturen oberhalb 120°C dauerhaft betrieben werden kann. Dauerhaft bedeutet, dass eine erfindungsgemäße Membran mindestens 100 Stunden, vorzugsweise mindestens 500 Stunden bei mindestens 80°C, vorzugsweise mindestens 120°C, besonders bevorzugt mindestens 160°C betrieben werden kann, ohne dass die Leistung, die gemäß der in WO 01/18894 A2 beschriebenen Methode gemessen werden kann, um mehr als 50%, bezogen auf die Anfangsleistung abnimmt.

Die vorstehend genannten Polymere können einzeln oder als Mischung (Blend) eingesetzt werden. Hierbei sind insbesondere Blends bevorzugt, die Polyazole und/oder Polysulfone enthalten. Die bevorzugten Blendkomponenten sind dabei Polyethersulfon, Polyetherketon und mit Sulfonsäuregruppen modifizierte Polymere wie in WO 02/36249 beschrieben. Durch die Verwendung von Blends können die mechanischen Eigenschaften verbessert und die Materialkosten verringert werden.

Eine besonders bevorzugte Gruppe von basischen Polymeren stellen Polyazole dar. Ein basisches Polymer auf Basis von Polyazol enthält wiederkehrende Azoleinheiten der allgemeinen Formel (I) und/oder (II) und/oder (III) und/oder (IV) und/oder (V) und/oder (VI) und/oder (VII) und/oder (VIII) und/oder (IX) und/oder (X) und/oder (XI) und/oder (XII) und/oder (XIII) und/oder (XIV) und/oder (XV) und/oder (XVI) und/oder (XVII) und/oder (XVIII) und/oder (XIX) und/oder (XX) und/oder (XXI) und/oder (XXII) 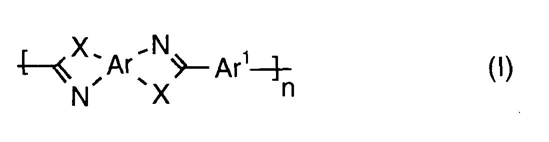 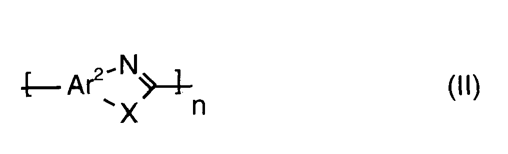 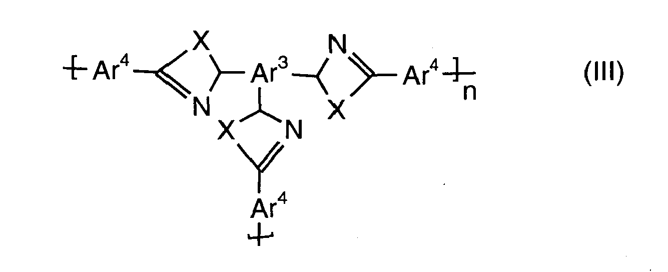 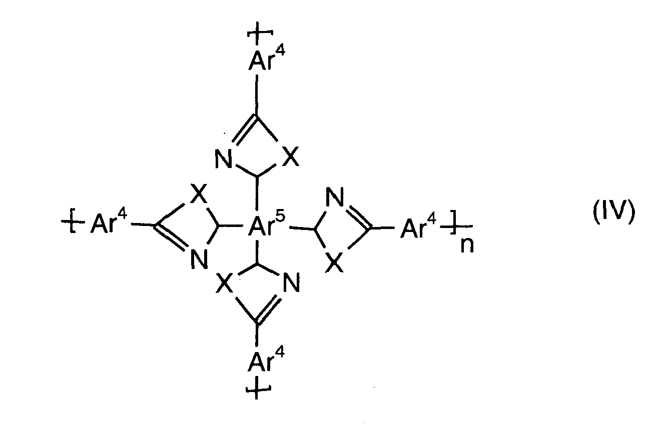 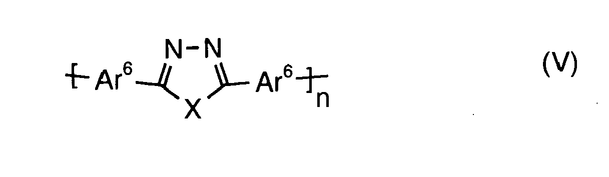 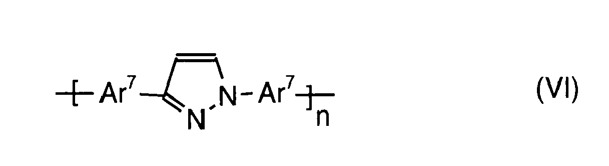 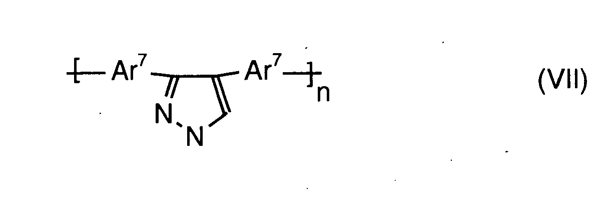 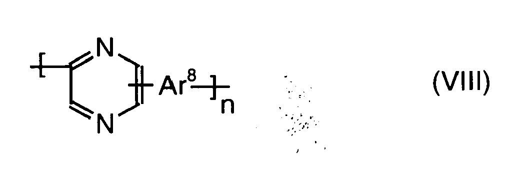 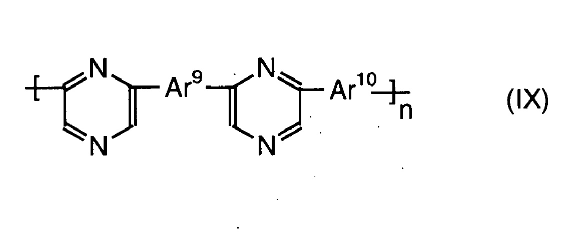 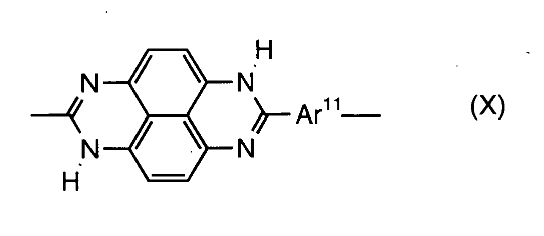 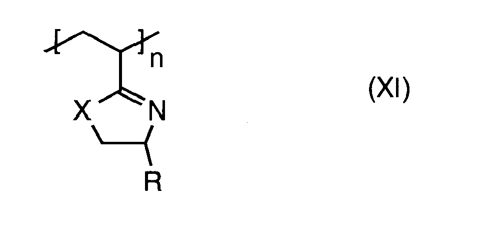 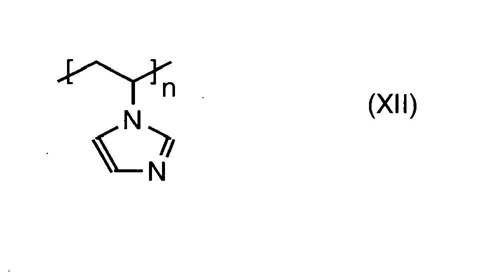 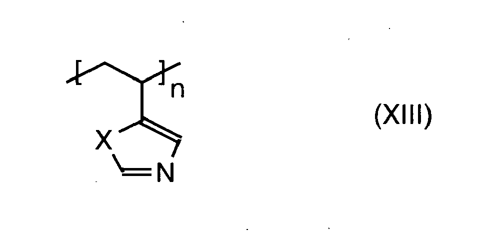 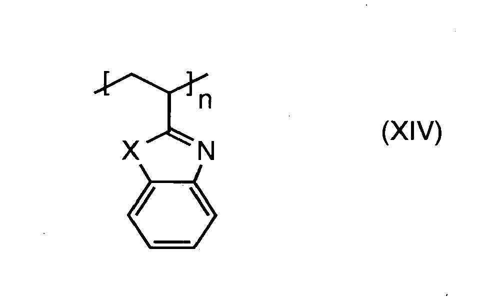 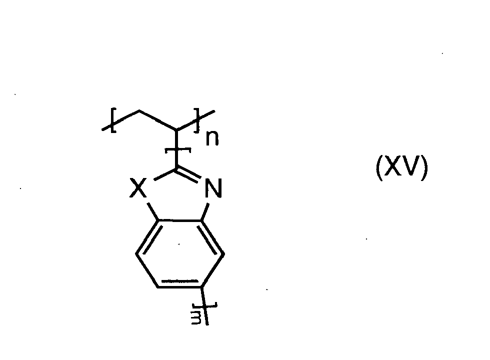 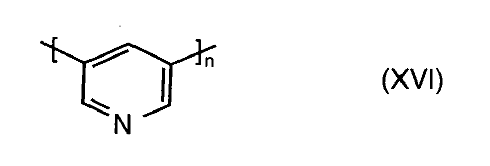 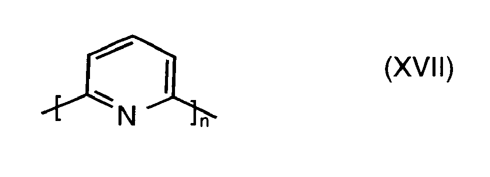 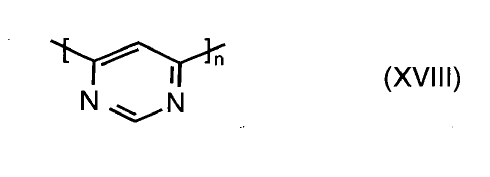 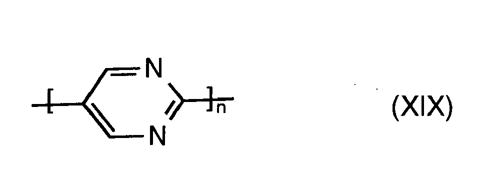 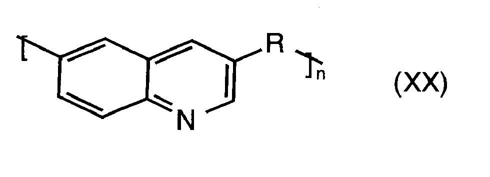 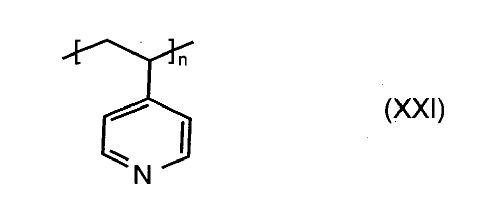 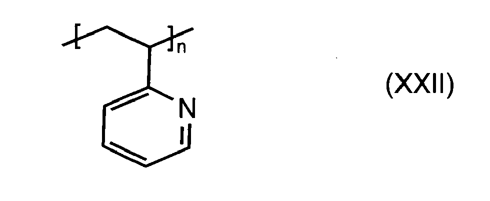 worin
- Ar: gleich oder verschieden sind und für eine vierbindige aromatische oder heteroaromatische Gruppe stehen, die ein- oder mehrkernig sein kann,
- Ar¹: gleich oder verschieden sind und für eine zweibindige aromatische oder heteroaromatische Gruppe stehen, die ein- oder mehrkernig sein kann,
- Ar²: gleich oder verschieden sind und für eine zwei oder dreibindige aromatische oder heteroaromatische Gruppe stehen, die ein- oder mehrkernig sein kann,
- Ar³: gleich oder verschieden sind und für eine dreibindige aromatische oder heteroaromatische Gruppe stehen, die ein- oder mehrkernig sein kann,
- Ar⁴: gleich oder verschieden sind und für eine dreibindige aromatische oder heteroaromatische Gruppe stehen, die ein- oder mehrkernig sein kann,
- Ar⁵: gleich oder verschieden sind und für eine vierbindige aromatische oder heteroaromatische Gruppe stehen, die ein- oder mehrkernig sein kann,
- Ar⁶: gleich oder verschieden sind und für eine zweibindige aromatische oder heteroaromatische Gruppe stehen, die ein- oder mehrkernig sein kann,
- Ar⁷: gleich oder verschieden sind und für eine zweibindige aromatische oder heteroaromatische Gruppe stehen, die ein- oder mehrkernig sein kann,
- Ar⁸: gleich oder verschieden sind und für eine dreibindige aromatische oder heteroaromatische Gruppe stehen, die ein- oder mehrkernig sein kann,
- Ar⁹: gleich oder verschieden sind und für eine zwei- oder drei- oder vierbindige aromatische oder heteroaromatische Gruppe stehen, die ein- oder mehrkernig sein kann,
- Ar¹⁰: gleich oder verschieden sind und für eine zwei- oder dreibindige aromatische oder heteroaromatische Gruppe stehen, die ein- oder mehrkernig sein kann,
- Ar¹¹: gleich oder verschieden sind und für eine zweibindige aromatische oder heteroaromatische Gruppe stehen, die ein- oder mehrkernig sein kann,
- X: gleich oder verschieden ist und für Sauerstoff, Schwefel oder eine Aminogruppe steht, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt
- R: gleich oder verschieden für Wasserstoff, eine Alkylgruppe und eine aromatische Gruppe steht, mit der Maßgabe das R in Formel (XX) nicht für Wasserstoff steht, und
- n, m: eine ganze Zahl größer gleich 10, bevorzugt größer gleich 100 ist.

Bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Chinolin, Pyridin, Bipyridin, Pyridazin, Pyrimidin, Pyrazin, Triazin, Tetrazin, Pyrol, Pyrazol, Anthracen, Benzopyrrol, Benzotriazol, Benzooxathiadiazol, Benzooxadiazol, Benzopyridin, Benzopyrazin, Benzopyrazidin, Benzopyrimidin, Benzopyrazin, Benzotriazin, Indolizin, Chinolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren, die gegebenenfalls auch substituiert sein können, ab.

Dabei ist das Substitionsmuster von Ar¹, Ar⁴, Ar⁶, Ar⁷, Ar⁸, Ar⁹, Ar¹⁰, Ar¹¹ beliebig, im Falle vom Phenylen beispielsweise kann Ar¹, Ar⁴, Ar⁶, Ar⁷, Ar⁸, Ar⁹, Ar¹⁰, Ar¹¹ ortho-, meta- und para-Phenylen sein. Besonders bevorzugte Gruppen leiten sich von Benzol und Biphenylen, die gegebenenfalls auch substituiert sein können, ab.

Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen.

Bevorzugte aromatische Gruppen sind Phenyl- oder Naphthyl-Gruppen. Die Alkylgruppen und die aromatischen Gruppen können substituiert sein.

Bevorzugte Substituenten sind Halogenatome wie z. B. Fluor, Aminogruppen, Hydroxygruppen oder kurzkettige Alkylgruppen wie z. B. Methyl- oder Ethylgruppen.

Bevorzugt sind Polyazole mit wiederkehrenden Einheiten der Formel (I) bei denen die Reste X innerhalb einer wiederkehrenden Einheit gleich sind.

Die Polyazole können grundsätzlich auch unterschiedliche wiederkehrende Einheiten aufweisen, die sich beispielsweise in ihrem Rest X unterscheiden. Vorzugsweise jedoch weist es nur gleiche Reste X in einer wiederkehrenden Einheit auf.

Weitere bevorzugte Polyazol-Polymere sind Polyimidazole, Polybenzthiazole, Polybenzoxazole, Polyoxadiazole, Polyquinoxalines, Polythiadiazole Poly(pyridine), Poly(pyrimidine), und Poly(tetrazapyrene).

In einer weiteren Ausführungsform der vorliegenden Erfindung ist das Polymer enthaltend wiederkehrende Azoleinheiten ein Copolymer oder ein Blend, das mindestens zwei Einheiten der Formel (I) bis (XXII) enthält, die sich voneinander unterscheiden. Die Polymere können als Blockcopolymere (Diblock, Triblock), statistische Copolymere, periodische Copolymere und/oder alternierende Polymere vorliegen.

In einer besonders bevorzugten Ausführungsform der vorliegenden Erfindung ist das Polymer enthaltend wiederkehrende Azoleinheiten ein Polyazol, das nur Einheiten der Formel (I) und/oder (II) enthält.

Die Anzahl der wiederkehrende Azoleinheiteh im Polymer ist vorzugsweise eine ganze Zahl größer gleich 10. Besonders bevorzugte Polymere enthalten mindestens 100 wiederkehrende Azoleinheiten.

Im Rahmen der vorliegenden Erfindung sind Polymere enthaltend wiederkehrende Benzimidazoleinheiten bevorzugt. Einige Beispiele der äußerst zweckmäßigen Polymere enthaltend wiederkehrende Benzimidazoleinheiten werden durch die nachfolgenden Formeln wiedergegeben: 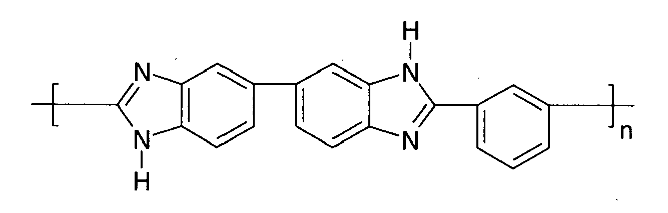 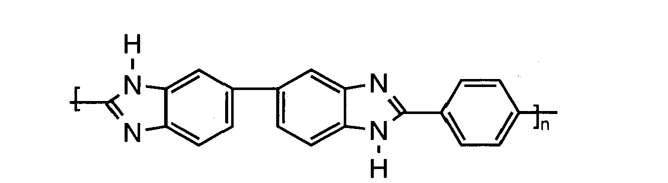 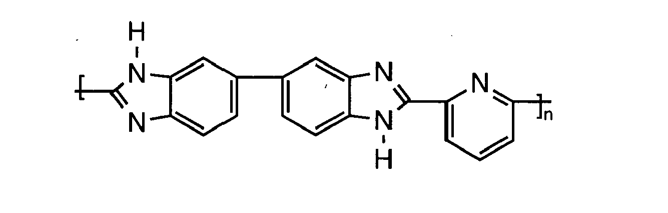 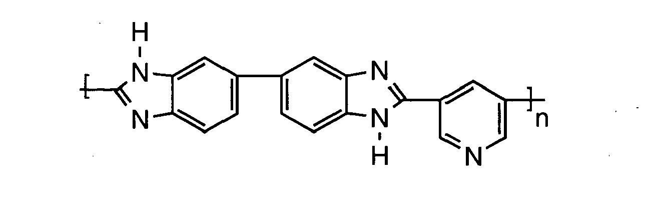 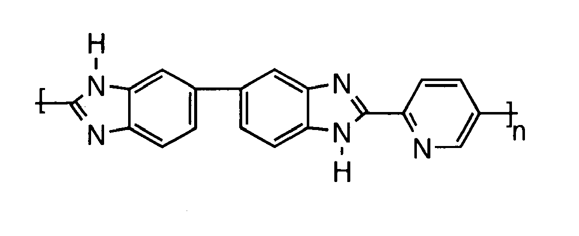 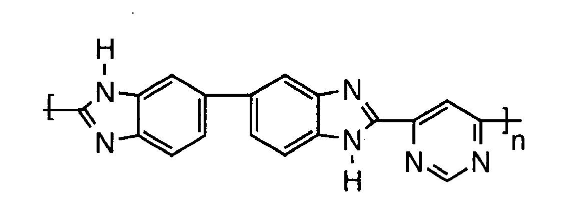 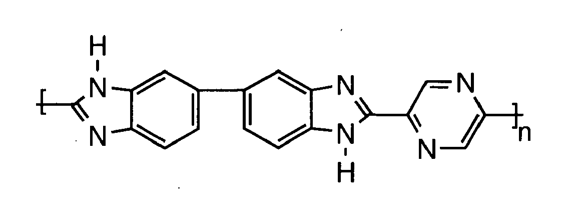 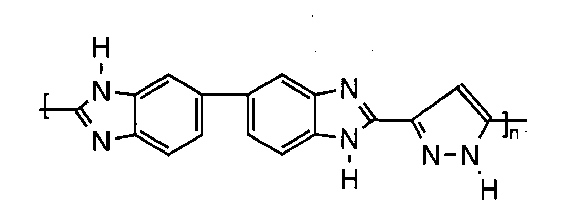 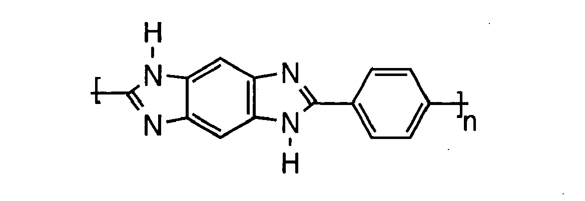 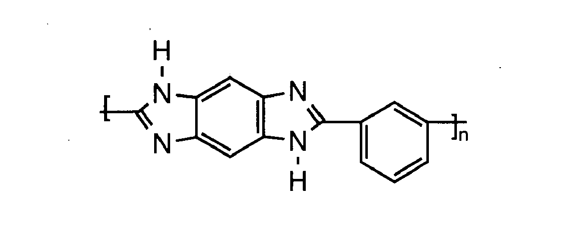 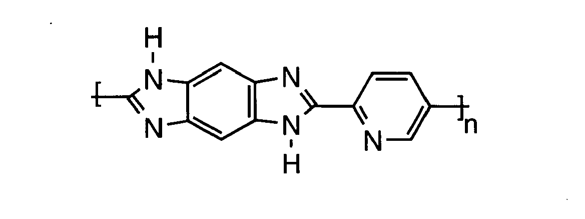 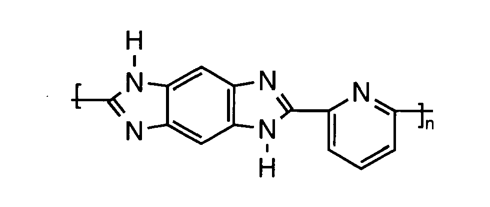 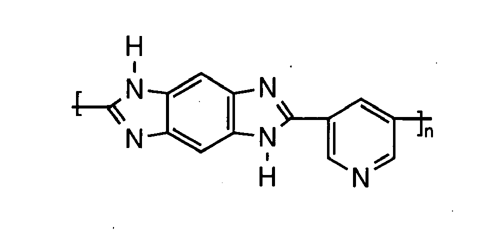 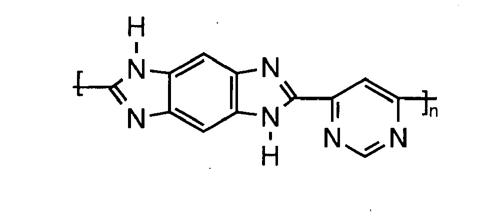 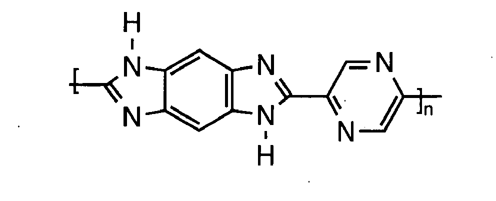 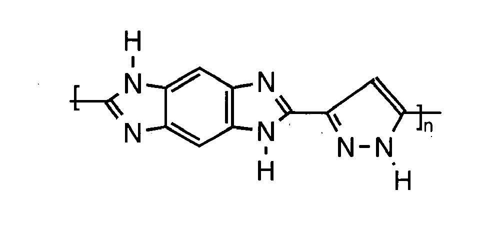 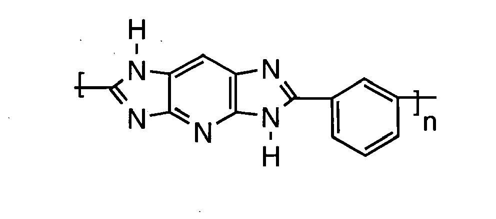 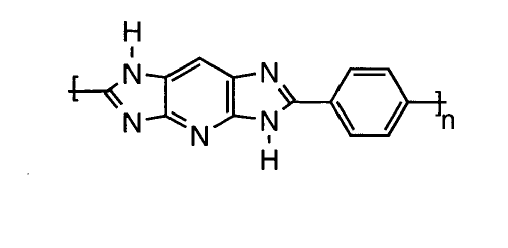 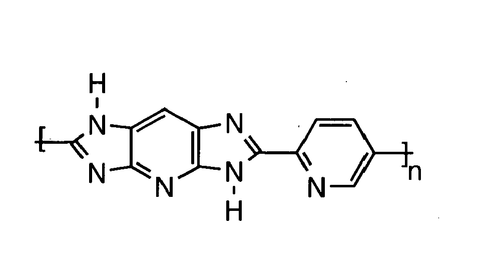 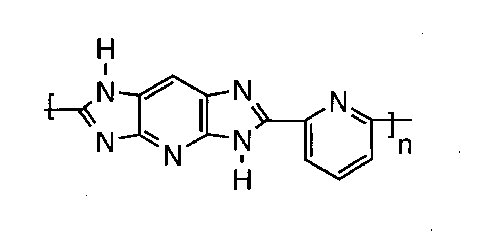 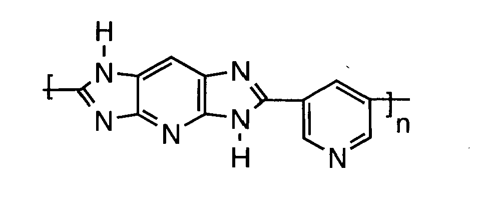 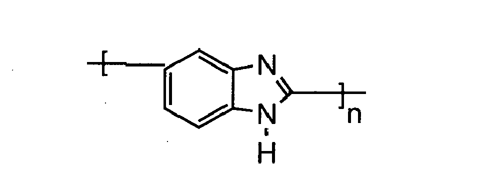 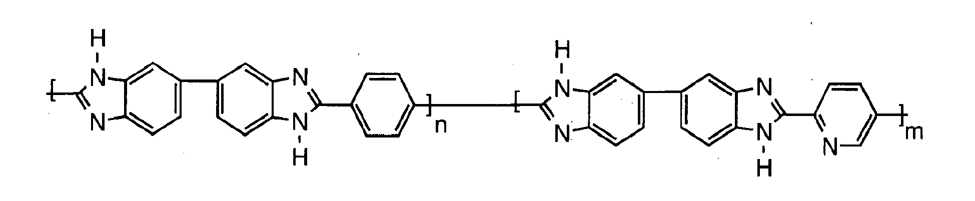 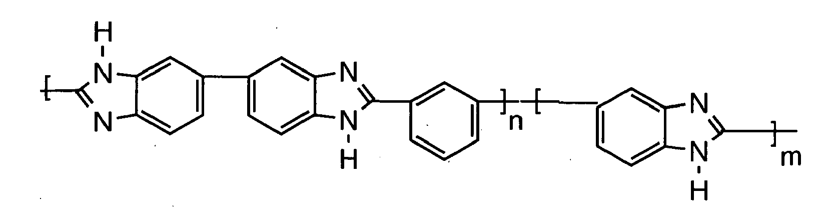 wobei n und m eine ganze Zahl größer gleich 10, vorzugsweise größer gleich 100 ist.

Die eingesetzten Polyazole, insbesondere jedoch die Polybenzimidazole zeichnen sich durch ein hohes Molekulargewicht aus. Gemessen als Intrinsische Viskosität beträgt diese mindestens 0,2 dl/g, vorzugsweise 0,8 bis 10 dl/g, insbesondere 1 bis 10 dl/g.

Die Herstellung derartiger Polyazole ist bekannt, wobei ein oder mehrere aromatische Tetra-Amino-Verbindungen mit ein oder mehreren aromatischen Carbonsäuren bzw. deren Estern, die mindestens zwei Säuregruppen pro Carbonsäure-Monomer enthalten, in der Schmelze zu einem Präpolymer umgesetzt werden. Das entstehende Präpolymer erstarrt im Reaktor und wird anschließend mechanisch zerkleinert. Das pulverförmige Präpolymer wird üblich in einer Festphasen-Polymerisation bei Temperaturen von bis zu 400°C endpolymerisiert.

Zu den bevorzugten aromatischen Carbonsäuren gehören unter anderem Di-carbonsäuren und Tri-carbonsäuren und Tetra-Carbonsäuren bzw. deren Estern oder deren Anhydride oder deren Säurechloride. Der Begriff aromatische Carbonsäuren umfaßt gleichermaßen auch heteroaromatische Carbonsäuren.

Vorzugsweise handelt es sich bei den aromatischen Dicarbonsäuren um Isophthalsäure, Terephthalsäure, Phthalsäure, 5-Hydroxyisophthalsäure, 4-Hydroxyisophthalsäure, 2-Hydroxyterephthalsäure, 5-Aminoisophthalsäure, 5-N,N-Dimethylaminoisophthalsäure, 5-N,N-Diethylaminoisophthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure, 3-Fluorophthalsäure, 5-Fluoroisophthalsäure, 2-Fluoroterphthalsäure, Tetrafluorophthalsäure, Tetrafluoroisophthalsäure, Tetrafluoroterephthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, 2,2-Bis(4-carboxyphenyl)hexafluoropropan, 4,4'-Stilbendicarbonsäure, 4-Carboxyzimtsäure, bzw. deren C1-C20-Alkyl-Ester oder C5-C12-Aryl-Ester, oder deren Säureanhydride oder deren Säurechloride.

Bei den aromatischen Tri-, tetra-carbonsäuren bzw. deren C1-C20-Alkyl-Ester oder C5-C12-Aryl-Ester oder deren Säureanhydride oder deren Säurechloride handelt es sich bevorzugt um 1,3,5-Benzol-tricarbonsäure (Trimesic acid), 1,2,4-Benzol-tricarbonsäure (Trimellitic acid), (2-Carboxyphenyl)iminodiessigsäure, 3,5,3'-Biphenyltricarbonsäure oder 3,5,4'-Biphenyltricarbonsäure.

Bei den aromatischen Tetracarbonsäuren bzw. deren C1-C20-Alkyl-Ester oder C5-C12-Aryl-Ester oder deren Säureanhydride oder deren Säurechloride handelt es sich bevorzugt um 3,5,3',5'-biphenyltetracarboxylic acid, 1,2,4,5-Benzoltetracarbonsäure, Benzophenontetracarbonsäure, 3,3',4,4'-Biphenyltetracarbonsäure, 2,2',3,3'-Biphenyltetracarbonsäure, 1,2,5,6-Naphthalintetracarbonsäure oder 1,4,5,8-Naphthalintetracarbonsäure.

Bevorzugt handelt es sich bei den eingesetzten heteroaromatischen Carbonsäuren um heteroaromatischen Dicarbonsäuren, Tricarbonsäuren und Tetracarbonsäuren bzw. deren Estern oder deren Anhydride. Als heteroaromatische Carbonsäuren werden aromatische Systeme verstanden welche mindestens ein Stickstoff-, Sauerstoff-, Schwefel- oder Phosphoratom im Aromaten enthalten. Vorzugsweise handelt es sich um Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 - Pyrimidindicarbonsäure, 2,5-Pyrazindicarbonsäure, 2,4,6-Pyridintricarbonsäure oder Benzimidazol-5,6-dicarbonsäure sowie deren C1-C20-Alkyl-Ester oder C5-C12-Aryl-Ester, oder deren Säureanhydride oder deren Säurechloride.

Der Gehalt an Tri-carbonsäure bzw. Tetracarbonsäuren (bezogen auf eingesetzte Dicarbonsäure) beträgt zwischen 0 und 30 Mol-%, vorzugsweise 0,1 und 20 Mol %, insbesondere 0,5 und 10 Mol-%.

Bevorzugt handelt es sich bei den eingesetzten aromatischen und heteroaromatischen Diaminocarbonsäuren um Diaminobenzoesäure oder deren Mono- und Dihydrochloridderivate.

Bevorzugt werden Mischungen von mindestens 2 verschiedenen aromatischen Carbonsäuren einzusetzen. Besonders bevorzugt werden Mischungen eingesetzt, die neben aromatischen Carbonsäuren auch heteroaromatische Carbonsäuren enthalten. Das Mischungsverhältnis von aromatischen Carbonsäuren zu heteroaromatischen Carbonsäuren beträgt zwischen 1:99 und 99:1, vorzugsweise 1:50 bis 50:1.

Bei diesen Mischungen handelt es sich insbesondere um Mischungen von N-heteroaromatischen Di-carbonsäuren und aromatischen Dicarbonsäuren. Nicht limitierende Beispiele dafür sind Isophthalsäure, Terephthalsäure, Phthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure,2,5-Pyrazindicarbonsäure.

Zu den bevorzugten aromatische Tetra-Amino-Verbindungen gehören unter anderem 3,3',4,4'-Tetraaminobiphenyl, 2,3,5,6-Tetraaminopyridin, 1,2,4,5-Tetraaminobenzol, 3,3',4,4'-Tetraaminodiphenylsulfon, 3,3',4,4'-Tetraaminodiphenylether, 3,3',4,4'-Tetraaminobenzophenon, 3,3',4,4'-Tetraaminodiphenylmethan und 3,3',4,4'-Tetraaminodiphenyldimethylmethan sowie deren Salze, insbesondere deren Mono-, Di-, Tri- und Tetrahydrochloridderivate.

Bevorzugte Polybenzimidazole sind unter dem Handelsnamen ®Celazole kommerziell erhältlich.

Zu den bevorzugten Polymeren gehören Polysulfone, insbesondere Polysulfon mit aromatischen und/oder heteroaromatischen Gruppen in der Hauptkette. Gemäß einem besonderen Aspekt der vorliegenden Erfindung weisen bevorzugte Polysulfone und Polyethersulfone eine Schmelzvolumenrate MVR 300/21,6 kleiner oder gleich 40 cm³/10 min, insbesondere kleiner oder gleich 30 cm³/ 10 min und besonders bevorzugt kleiner oder gleich 20 cm³/ 10 min gemessen nach ISO 1133 auf. Hierbei sind Polysulfone mit einer Vicat-Erweichungstemperatur VST/A/50 von 180°C bis 230°C bevorzugt. In noch einer bevorzugten Ausführungsform der vorliegenden Erfindung ist das Zahlenmittel des Molekulargewichts von den Polysulfonen größer als 30.000 g/mol.

Zu den Polymeren auf Basis von Polysulfon gehören insbesondere Polymere, welche wiederkehrende Einheiten mit verknüpfenden Sulfon-Gruppen entsprechend den allgemeinen Formeln A, B, C, D, E, F und/oder G aufweisen:

-O-R-SO₂-R- (A)

-O-R-SO₂-R-O-R- (B)

-O-R-SO₂-R-O-R-R- (C)

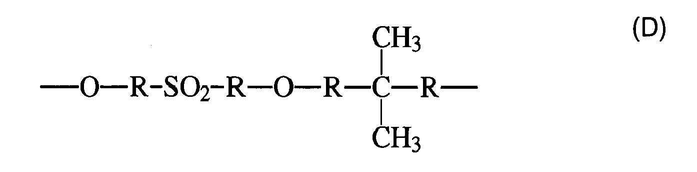

-O-R-SO₂-R-R-SO₂-R- (E)

-O-R-SO₂-R-R-SO₂-R-O-R-SO₂-1 (F)

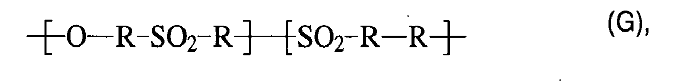

worin die Reste R unabhängig voneinander, gleich oder verschieden sind und eine aromatische oder heteroaromatische Gruppen darstellen, wobei diese Reste zuvor näher erläutert wurden. Hierzu gehören insbesondere 1,2-Phenylen, 1,3-Phenylen, 1,4-Phenylen, 4,4'-Biphenyl, Pyridin, Chinolin, Naphthalin, Phenanthren.

Zu den im Rahmen der vorliegenden Erfindung bevorzugten Polysulfone gehören Homo- und Copolymere, beispielsweise statistische Copolymere. Besonders bevorzugte Polysulfone umfassen wiederkehrende Einheiten der Formeln H bis N: 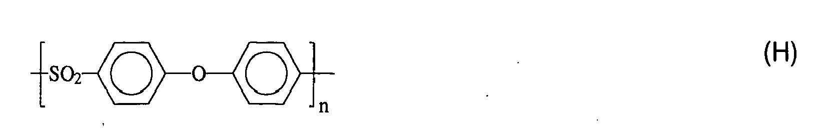 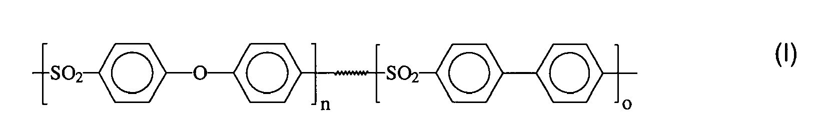 mit n > o 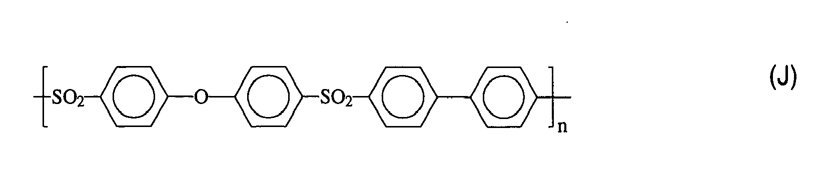 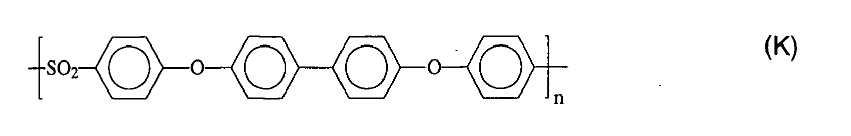 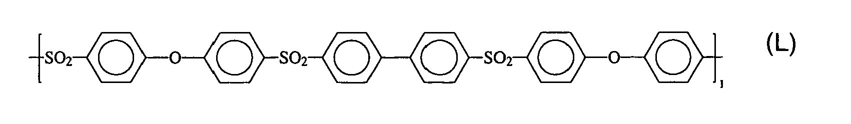 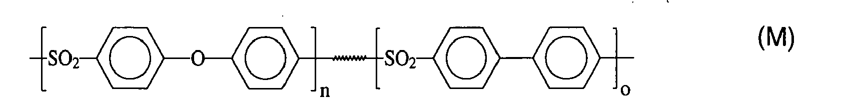 mit n < o

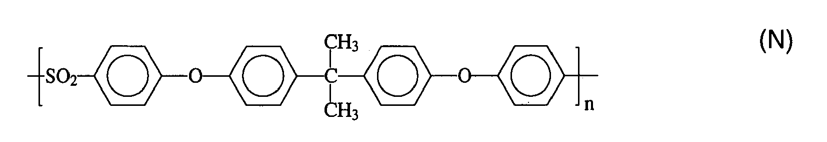

Die zuvor beschriebenen Polysulfone können unter den Handelsnamen ^{®}Victrex 200 P, ^{®}Victrex 720 P, ^{®}Ultrason E, ^{®}Ultrason S, ^{®}Mindel, ^{®}Radel A, ^{®}Radel R, ^{®}Victrex HTA, ^{®}Astrel und ^{®}Udel kommerziell erhalten werden.

Darüber hinaus sind Polyetherketone, Polyetherketonketone, Polyetheretherketone, Polyetheretherketonketone und Polyarylketone besonders bevorzugt. Diese Hochleistungspolymere sind an sich bekannt und können unter den Handelsnamen Victrex^{®} PEEK^{™}, ^{®}Hostatec, ^{®}Kadel kommerziell erhalten werden.

Die vorstehend genannten Polysulfone sowie die genannten Polyetherketone, Polyetherketonketone, Polyetheretherketone, Polyetheretherketonketone und Polyarylketone können, wie bereits dargelegt, als Blendbestandteil mit basischen Polymeren vorliegen. Des Weiteren können die vorstehend genannten Polysulfone sowie die vorstehend genannten Polyetherketone, Polyetherketonketone, Polyetheretherketone, Polyetheretherketonketone und Polyarylketone in sulfonierter Form als Polymerelektrolyt eingesetzt werden, wobei die sulfonierten Materialien auch basische Polymere, insbesondere Polyazole, als Blendmaterial aufweisen können. Auch für diese Ausführungsformen gelten die gezeigten und bevorzugten Ausführungsformen hinsichtlich der basischen Polymere bzw. Polyazole.

Zur Herstellung von Polymerfolien kann ein Polymer, vorzugsweise ein basisches Polymer, insbesondere ein Polyazol, in einem weiteren Schritt in polaren, aprotischen Lösemitteln, wie beispielsweise Dimethylacetamid (DMAc), gelöst und eine Folie mittels klassischer Verfahren erzeugt werden.

Zur Entfernung von Lösemittelresten kann die so erhaltene Folie mit einer Waschflüssigkeit, wie in WO 02/071518 beschrieben, behandelt werden. Durch die in der vorstehend genannten Patentanmeldung beschriebene Reinigung der Polyazolfolie von Lösungsmittelresten verbessern sich überraschend die mechanischen Eigenschaften der Folie. Diese Eigenschaften umfassen insbesondere den E-Modul, die Reißfestigkeit und die Bruchzähigkeit der Folie.

Zusätzlich kann der Polymerfilm weitere Modifizierungen, beispielsweise durch Vernetzung, wie in WO 02/070592 oder in WO 00/44816 beschrieben, aufweisen. In einer bevorzugten Ausführungsform enthält die eingesetzte Polymerfolie aus einem basischen Polymer und mindestens einer Blendkomponente zusätzlich einem Vernetzer wie in WO 03/016384 beschrieben.

Die Dicke der Polyazolfolien kann in weiten Bereichen liegen. Vorzugsweise liegt die Dicke der Polyazolfolie vor einer Dotierung mit Säure im Bereich von 5 µm bis 2000 µm, besonders bevorzugt im Bereich von 10µm bis 1000 µm, ohne dass hierdurch eine Beschränkung erfolgen soll.

Um eine Protonen-Leitfähigkeit zu erzielen, werden diese Folien mit einer Säure dotiert. Säuren umfassen in diesem Zusammenhang alle bekannten Lewis- und Bronsted-Säuren, vorzugsweise anorganische Lewis-und Brønsted-Säuren.

Weiterhin ist auch der Einsatz von Polysäuren möglich, insbesondere Isopolysäuren und Heteropolysäuren sowie von Mischungen verschiedener Säuren. Dabei bezeichnen im Sinne der vorliegenden Erfindung Heteropolysäuren anorganische Polysäuren mit mindestens zwei verschiedenen Zentralatomen, die aus jeweils schwachen, mehrbasischen Sauerstoff-Säuren eines Metalls (vorzugsweise Cr, Mo, V, W) und eines Nichtmetalls (vorzugsweise As, I, P, Se, Si, Te) als partielle gemischte Anhydride entstehen. Zu ihnen gehören unter anderen die 12-Molybdatophosphorsäure und die 12-Wolframatophosphorsäure.

Über den Dotierungsgrad kann die Leitfähigkeit der Polyazolfolie beeinflusst werden. Dabei nimmt die Leitfähigkeit mit steigender Konzentration an Dotierungsmittel solange zu, bis ein maximaler Wert erreicht ist. Erfindungsgemäß wird der Dotierungsgrad angegeben als Mol Säure pro Mol Wiederholungseinheit des Polymers. Im Rahmen der vorliegenden Erfindung ist ein Dotierungsgrad zwischen 3 und 50, insbesondere zwischen 5 und 40, bevorzugt.

Besonders bevorzugte Dotierungsmittel sind Schwefelsäure und Phosphorsäure, bzw. Verbindungen, die diese Säuren, beispielsweise bei Hydrolyse oder temperaturbedingt freisetzen. Ein ganz besonders bevorzugtes Dotierungsmittel ist Phosphorsäure (H₃PO₄). Hierbei werden im Allgemeinen hochkonzentrierte Säuren eingesetzt. Gemäß einem besonderen Aspekt der vorliegenden Erfindung beträgt die Konzentration der Phosphorsäure mindestens 50% Gew.-%, insbesondere mindestens 80 Gew.-%, bezogen auf das Gewicht des Dotierungsmittels.

Des Weiteren können protonenleitfähige Membranen auch durch ein Verfahren erhalten werden umfassend die Schritte
I) Lösen von Polymeren, insbesondere Polyazolen in Polyphosphorsäure,
II) Erwärmen der Lösung erhältlich gemäß Schritt A) unter Inertgas auf Temperaturen von bis zu 400°C,
III) Bilden einer Membran unter Verwendung der Lösung des Polymeren gemäß Schritt 11) auf einem Träger und
IV) Behandlung der in Schritt III) gebildeten Membran bis diese selbsttragend ist.

Des Weiteren können dotierte Polyazolfolien durch ein Verfahren erhalten werden umfassend die Schritte
A) Mischen von einer oder mehreren aromatischen Tetra-Amino-Verbindungen mit einer oder mehreren aromatischen Carbonsäuren bzw. deren Estern, die mindestens zwei Säuregruppen pro Carbonsäure-Monomer enthalten, oder Mischen von einer oder mehreren aromatischen und/oder heteroaromatischen Diaminocarbonsäuren, in Polyphosphorsäure unter Ausbildung einer Lösung und/oder Dispersion
B) Aufbringen einer Schicht unter Verwendung der Mischung gemäß Schritt A) auf einem Träger oder auf einer Elektrode,
C) Erwärmen des flächigen Gebildes/Schicht erhältlich gemäß Schritt B) unter Inertgas auf Temperaturen von bis zu 350°C, vorzugsweise bis zu 280°C unter Ausbildung des Polyazol-Polymeren.
D) Behandlung der in Schritt C) gebildeten Membran (bis diese selbsttragend ist).

Die in Schritt A) einzusetzenden aromatischen bzw. heteroaromatschen Carbonsäure- und Tetra-Amino-Verbindungen wurden zuvor beschrieben.

Bei der in Schritt A) verwendeten Polyphosphorsäure handelt es sich um handelsübliche Polyphosphorsäuren wie diese beispielsweise von Riedel-de Haen erhältlich sind. Die Polyphosphorsäuren Hₙ₊₂PₙO₃ₙ₊₁ (n>1) besitzen üblicherweise einen Gehalt berechnet als P₂O₅ (acidimetrisch) von mindestens 83%. Anstelle einer Lösung der Monomeren kann auch eine Dispersion/Suspension erzeugt werden.

Die in Schritt A) erzeugte Mischung weist ein Gewichtsverhältnis Polyphosphorsäure zu Summe aller Monomeren von 1:10000 bis 10000:1, vorzugsweise 1:1000 bis 1000:1, insbesondere 1:100 bis 100:1, auf.

Die Schichtbildung gemäß Schritt B) erfolgt mittels an sich bekannter Maßnahmen (Gießen, Sprühen, Rakeln) die aus dem Stand der Technik zur Polymerfilm-Herstellung bekannt sind. Als Träger sind alle unter den Bedingungen als innert zu bezeichnenden Träger geeignet. Zur Einstellung der Viskosität kann die Lösung gegebenenfalls mit Phosphorsäure (konz. Phosphorsäure, 85%) versetzt werden. Hierdurch kann die Viskosität auf den gewünschten Wert eingestellt und die Bildung der Membran erleichtert werden.

Die gemäß Schritt B) erzeugte Schicht hat eine Dicke zwischen 20 und 4000 µm, vorzugsweise zwischen 30 und 3500 µm, insbesondere zwischen 50 und 3000 µm.

Insofern die Mischung gemäß Schritt A) auch Tricarbonsäuren bzw. Tetracarbonsäre enthält wird hierdurch eine Verzweigung/Vernetzung des gebildeten Polymeren erzielt. Diese trägt zur Verbesserung der mechanischen Eigenschaft bei. Die Behandlung der gemäß Schritt C) erzeugten Polymerschicht erfolgt in Gegenwart von Feuchtigkeit, bei Temperaturen und für eine Dauer ausreichend bis die Schicht eine ausreichende Festigkeit für den Einsatz in Brennstoffzellen besitzt. Die Behandlung kann soweit erfolgen, dass die Membran selbsttragend ist, so dass sie ohne Beschädigung vom Träger abgelöst werden kann.

Gemäß Schritt C) wird das in Schritt B) erhaltene flächige Gebilde auf eine Temperatur von bis zu 350°C, vorzugsweise bis zu 280°C und besonders bevorzugt im Bereich von 200°C bis 250°C erhitzt. Die in Schritt C) einzusetzenden Inertgase sind in der Fachwelt bekannt. Zu diesen gehören insbesondere Stickstoff sowie Edelgase, wie Neon, Argon, Helium.

In einer Variante des Verfahrens kann durch Erwärmen der Mischung aus Schritt A) auf Temperaturen von bis zu 350°C, vorzugsweise bis zu 280°C, bereits die Bildung von Oligomeren und/oder Polymeren bewirkt werden. In Abhängigkeit von der gewählten Temperatur und Dauer, kann anschließend auf die Erwärmung in Schritt C) teilweise oder gänzlich verzichtet werden. Auch diese Variante ist Gegenstand der vorliegenden Erfindung.

Die Behandlung der Membran in Schritt D) erfolgt bei Temperaturen oberhalb 0°C und kleiner 150°C, vorzugsweise bei Temperaturen zwischen 10°C und 120°C, insbesondere zwischen Raumtemperatur (20°C) und 90°C, in Gegenwart von Feuchtigkeit bzw. Wasser und/oder Wasserdampf bzw. und/oder wasserenthaltende Phosphorsäure von bis zu 85%. Die Behandlung erfolgt vorzugsweise unter Normaldruck, kann aber auch unter Einwirkung von Druck erfolgen. Wesentlich ist, dass die Behandlung in Gegenwart von ausreichender Feuchtigkeit geschieht, wodurch die anwesende Polyphosphorsäure durch partielle Hydrolyse unter Ausbildung niedermolekularer Polyphosphorsäure und/oder Phosphorsäure zur Verfestigung der Membran beiträgt.

Die Hydrolyseflüssigkeit kann eine Lösung darstellen, wobei die Flüssigkeit auch suspendierte und/oder dispergierte Bestandteile enthalten kann. Die Viskosität der Hydrolyseflüssigkeit kann in weiten Bereichen liegen, wobei zur Einstellung der Viskosität eine Zugabe von Lösungsmitteln oder eine Temperaturerhöhung erfolgen kann. Vorzugsweise liegt die dynamische Viskosität im Bereich von 0,1 bis 10000 mPa*s, insbesondere 0,2 bis 2000 mPa*s, wobei diese Werte beispielsweise gemäß DIN 53015 gemessen werden können.

Die Behandlung gemäß Schritt D) kann mit jeder bekannten Methode erfolgen. Beispielsweise kann die in Schritt C) erhaltene Membran in ein Flüssigkeitsbad getaucht werden. Des Weiteren kann die Hydrolyseflüssigkeit auf die Membran gesprüht werden. Weiterhin kann die Hydrolyseflüssigkeit über die Membran gegossen werden. Die letzteren Methoden haben den Vorteil, dass die Konzentration an Säure in der Hydrolyseflüssigkeit während der Hydrolyse konstant bleibt. Das erste Verfahren ist jedoch häufig kostengünstiger in der Ausführung.

Zu den Sauerstoffsäuren des Phosphors und/oder Schwefels gehören insbesondere Phosphinsäure, Phosphonsäure, Phosphorsäure, Hypodiphosphonsäure Hypodiphosphorsäure, Oligophosphorsäuren, schwefelige Säure, dischwefelige Säure und/oder Schwefelsäure. Diese Säuren können einzeln oder als Mischung eingesetzt werden.

Des Weiteren umfassen die Sauerstoffsäuren des Phosphors und/oder Schwefels radikalisch polymerisierbare Monomere, die Phosphonsäure- und/oder Sulfonsäuregruppen umfassen

Phosphonsäuregruppen umfassende Monomere sind in der Fachwelt bekannt. Es handelt sich hierbei um Verbindungen, die mindestens eine Kohlenstoff-Kohlenstoff-Doppelbindung und mindestens eine Phosphonsäuregruppe aufweisen. Vorzugsweise weisen die zwei Kohlenstoffatome, die die Kohlenstoff-Kohlenstoff-Doppelbindung bilden, mindestens zwei, vorzugsweise 3 Bindungen zu Gruppen auf, die zu einer geringen sterischen Hinderung der Doppelbindung führen. Zu diesen Gruppen gehören unter anderem Wasserstoffatome und Halogenatome, insbesondere Fluoratome. Im Rahmen der vorliegenden Erfindung ergibt sich das Phosphonsäuregruppen umfassende Polymer aus dem Polymerisationsprodukt, das durch Polymerisation des Phosphonsäuregruppen umfassenden Monomers allein oder mit weiteren Monomeren und/oder Vernetzern erhalten wird.

Das Phosphonsäuregruppen umfassende Monomer kann ein, zwei, drei oder mehr Kohlenstoff-Kohlenstoff-Doppelbindungen umfassen. Des Weiteren kann das Phosphonsäuregruppen umfassende Monomer ein, zwei, drei oder mehr Phosphonsäuregruppen enthalten.

Im Allgemeinen enthält das Phosphonsäuregruppen umfassende Monomer 2 bis 20, vorzugsweise 2 bis 10 Kohlenstoffatome.

Bei dem Phosphonsäuregruppen umfassenden Monomer handelt es sich vorzugsweise um Verbindungen der Formel 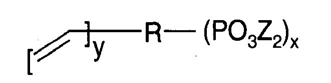 worin
- R: eine Bindung, eine zweibindige C1-C15-Alkylengruppe, zweibindige C1-C15-Alkylenoxygruppe, beispielsweise Ethylenoxygruppe oder zweibindige C5-C20-Aryl- oder Heteroarylgruppe bedeutet, wobei die vorstehenden Reste ihrerseits mit Halogen, -OH, COOZ, -CN, NZ₂ substituiert sein können,
- Z: unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x: eine ganze Zahl 1, 2, 3, 4, 5, 6, 7, 8, 9 oder 10 bedeutet
- y: eine ganze Zahl 1, 2, 3, 4, 5, 6, 7, 8, 9 oder 10 bedeutet
und/oder der Formel 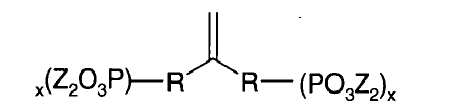 worin
- R: eine Bindung, eine zweibindige C1-C15-Alkylengruppe, zweibindige C1-C15-Alkylenoxygruppe, beispielsweise Ethylenoxygruppe oder zweibindige C5-C20-Aryl- oder Heteroarylgruppe bedeutet, wobei die vorstehenden Reste ihrerseits mit Halogen, -OH, COOZ, -CN, NZ₂ substituiert sein können,
- Z: unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x: eine ganze Zahl 1, 2, 3, 4, 5, 6, 7, 8, 9 oder 10 bedeutet
und/oder der Formel 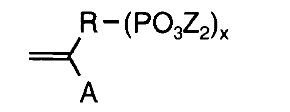 worin
- A: eine Gruppe der Formeln COOR², CN, CONR²₂, OR² und/oder R² darstellt, worin R² Wasserstoff, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, NZ₂ substituiert sein können
- R: eine Bindung, eine zweibindige C1-C15-Alkylengruppe, zweibindige C1-C15-Alkylenoxygruppe, beispielsweise Ethylenoxygruppe oder zweibindige C5-C20-Aryl- oder Heteroarylgruppe bedeutet, wobei die vorstehenden Reste ihrerseits mit Halogen, -OH, COOZ, -CN, NZ₂ substituiert sein können,
- Z: unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x: eine ganze Zahl 1, 2, 3, 4, 5, 6, 7, 8, 9 oder 10 bedeutet.

Zu den bevorzugten Phosphonsäuregruppen umfassenden Monomeren gehören unter anderem Alkene, die Phosphonsäuregruppen aufweisen, wie Ethenphosphonsäure, Propenphosphonsäure, Butenphosphonsäure; Acrylsäureund/oder Methacrylsäure-Verbindungen, die Phosphonsäuregruppen aufweisen, wie beispielsweise 2-Phosphonomethyl-acrylsäure, 2-Phosphonomethylmethacrylsäure, 2-Phosphonomethyl-acrylsäureamid und 2-Phosphonomethylmethacrylsäureamid.

Besonders bevorzugt wird handelsübliche Vinylphosphonsäure (Ethenphosphonsäure), wie diese beispielsweise von der Firma Aldrich oder Clariant GmbH erhältlich ist, eingesetzt. Eine bevorzugte Vinylphosphonsäure weist eine Reinheit von mehr als 70%, insbesondere 90 % und besonders bevorzugt mehr als 97% Reinheit auf.

Die Phosphonsäuregruppen umfassenden Monomere können des Weiteren auch in Form von Derivaten eingesetzt werden, die anschließend in die Säure überführt werden können, wobei die Überführung zur Säure auch in polymerisiertem Zustand erfolgen kann. Zu diesen Derivaten gehören insbesondere die Salze, die Ester, die Amide und die Halogenide der Phosphonsäuregruppen umfassenden Monomere.

Die Phosphonsäuregruppen umfassenden Monomere können des Weiteren auch nach der Hydrolyse auf und in die Membran eingebracht werden. Dies kann mittels an sich bekannter Maßnahmen (z.B. Sprühen, Tauchen etc.) die aus dem Stand der Technik bekannt sind, erfolgen.

Gemäß einem besonderen Aspekt der vorliegenden Erfindung ist das Verhältnis des Gewichts der Summe aus Phosphorsäure, Polyphosphorsäure und der Hydrolyseprodukte der Polyphosphorsäure zum Gewicht der radikalisch polymerisierbaren Monomere, beispielsweise der Phosphonsäuregruppen umfassenden Monomere, vorzugsweise größer oder gleich 1:2, insbesondere größer oder gleich 1:1 und besonders bevorzugt größer oder gleich 2:1.

Vorzugsweise liegt das Verhältnis des Gewichts der Summe aus Phosphorsäure, Polyphosphorsäure und der Hydrolyseprodukte der Polyphosphorsäure zum Gewicht der radikalisch polymerisierbaren Monomere im Bereich von 1000:1 bis 3:1, insbesondere 100:1 bis 5:1 und besonders bevorzugt 50:1 bis 10:1.

Dieses Verhältnis kann leicht durch übliche Verfahren ermittelt werden, wobei die Phosphorsäure, Polyphosphorsäure und deren Hydrolyseprodukte vielfach aus der Membran ausgewaschen werden können. Hierbei kann das Gewicht der Polyphosphorsäure und deren Hydrolyseprodukte nach der vollständigen Hydrolyse zur Phosphorsäure bezogen werden. Dies gilt im Allgemeinen ebenfalls für die radikalisch polymerisierbaren Monomere.

Sulfonsäuregruppen umfassende Monomere sind in der Fachwelt bekannt. Es handelt sich hierbei um Verbindungen, die mindestens eine Kohlenstoff-Kohlenstoff-Doppelbindung und mindestens eine Sulfonsäuregruppe aufweisen. Vorzugsweise weisen die zwei Kohlenstoffatome, die die Kohlenstoff-Kohlenstoff-Doppelbindung bilden, mindestens zwei, vorzugsweise 3 Bindungen zu Gruppen auf, die zu einer geringen sterischen Hinderung der Doppelbindung führen. Zu diesen Gruppen gehören unter anderem Wasserstoffatome und Halogenatome, insbesondere Fluoratome. Im Rahmen der vorliegenden Erfindung ergibt sich das Sulfonsäuregruppen umfassende Polymer aus dem Polymerisationsprodukt, das durch Polymerisation des Sulfonsäuregruppen umfassenden Monomers allein oder mit weiteren Monomeren und/oder Vernetzern erhalten wird.

Das Sulfonsäuregruppen umfassende Monomer kann ein, zwei, drei oder mehr Kohlenstoff-Kohlenstoff-Doppelbindungen umfassen. Des weiteren kann das Sulfonsäuregruppen umfassende Monomer ein, zwei, drei oder mehr Sulfonsäuregruppen enthalten.

Im Allgemeinen enthält das Sulfonsäuregruppen umfassende Monomer 2 bis 20, vorzugsweise 2 bis 10 Kohlenstoffatome.

Bei dem Sulfonsäuregruppen umfassenden Monomer handelt es sich vorzugsweise um Verbindungen der Formel 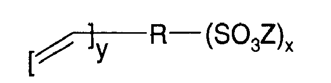 worin
- R: eine Bindung, eine zweibindige C1-C15-Alkylengruppe, zweibindige C1-C15-Alkylenoxygruppe, beispielsweise Ethylenoxygruppe oder zweibindige C5-C20-Aryl- oder Heteroarylgruppe bedeutet, wobei die vorstehenden Reste ihrerseits mit Halogen, -OH, COOZ, -CN, NZ₂ substituiert sein können,
- Z: unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x: eine ganze Zahl 1, 2, 3, 4, 5, 6, 7, 8, 9 oder 10 bedeutet
- y: eine ganze Zahl 1, 2, 3, 4, 5, 6, 7, 8, 9 oder 10 bedeutet
und/oder der Formel 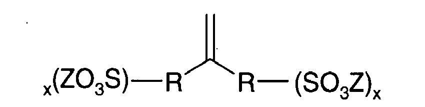 worin
- R: eine Bindung, eine zweibindige C1-C15-Alkylengruppe, zweibindige C1-C15-Alkylenoxygruppe, beispielsweise Ethylenoxygruppe oder zweibindige C5-C20-Aryl- oder Heteroarylgruppe bedeutet, wobei die vorstehenden Reste ihrerseits mit Halogen, -OH, COOZ, -CN, NZ₂ substituiert sein können,
- Z: unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x: eine ganze Zahl 1, 2, 3, 4, 5, 6, 7, 8, 9 oder 10 bedeutet
und/oder der Formel 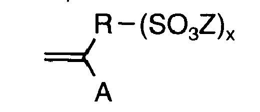 worin
- A: eine Gruppe der Formeln COOR², CN, CONR²₂, OR² und/oder R² darstellt, worin R² Wasserstoff, eine C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, COOZ, -CN, NZ₂ substituiert sein können
- R: eine Bindung, eine zweibindige C1-C15-Alkylengruppe, zweibindige C1-C15-Alkylenoxygruppe, beispielsweise Ethylenoxygruppe oder zweibindige C5-C20-Aryl- oder Heteroarylgruppe bedeutet, wobei die vorstehenden Reste ihrerseits mit Halogen, -OH, COOZ, -CN, NZ₂ substituiert sein können,
- Z: unabhängig voneinander Wasserstoff, C1-C15-Alkylgruppe, C1-C15-Alkoxygruppe, Ethylenoxygruppe oder C5-C20-Aryl oder Heteroarylgruppe bedeutet, wobei die vorstehenden Reste ihrerseits mit Halogen, -OH, -CN, substituiert sein können und
- x: eine ganze Zahl 1, 2, 3, 4, 5, 6, 7, 8, 9 oder 10 bedeutet.

Zu den bevorzugten Sulfonsäuregruppen umfassenden Monomeren gehören unter anderem Alkene, die Sulfonsäuregruppen aufweisen, wie Ethensulfonsäure, Propensulfonsäure, Butensulfonsäure; Acrylsäure- und/oder Methacrylsäure-Verbindungen, die Sulfonsäuregruppen aufweisen, wie beispielsweise 2-Sulfonomethyl-acrylsäure, 2-Sulfonomethyl-methacrylsäure, 2-Sulfonomethylacrylsäureamid und 2-Sulfonomethyl-methacrylsäureamid.

Besonders bevorzugt wird handelsübliche Vinylsulfonsäure (Ethensulfonsäure), wie diese beispielsweise von der Firma Aldrich oder Clariant GmbH erhältlich ist, eingesetzt. Eine bevorzugte Vinylsulfonsäure weist eine Reinheit von mehr als 70%, insbesondere 90 % und besonders bevorzugt mehr als 97% Reinheit auf.

Die Sulfonsäuregruppen umfassenden Monomere können des Weiteren auch in Form von Derivaten eingesetzt werden, die anschließend in die Säure überführt werden können, wobei die Überführung zur Säure auch in polymerisiertem Zustand erfolgen kann. Zu diesen Derivaten gehören insbesondere die Salze, die Ester, die Amide und die Halogenide der Sulfonsäuregruppen umfassenden Monomere.

Die Sulfonsäuregruppen umfassenden Monomere können des Weiteren auch nach der Hydrolyse auf und in die Membran eingebracht werden. Dies kann mittels an sich bekannter Maßnahmen (z.B. Sprühen, Tauchen etc.) die aus dem Stand der Technik bekannt sind, erfolgen.

In einer weiteren Ausführungsform der Erfindung können zur Vernetzung befähigte Monomere eingesetzt werden. Diese Monomere können der Hydrolyseflüssigkeit beigefügt werden. Darüber hinaus können die zur Vernetzung befähigten Monomere auch auf die nach der Hydrolyse erhaltene Membran aufgebracht werden.

Bei den zur Vernetzung befähigten Monomeren handelt es sich insbesondere um Verbindungen, die mindestens 2 Kohlenstoff-Kohlenstoff Doppelbindungen aufweisen. Bevorzugt werden Diene, Triene, Tetraene, Dimethylacrylate, Trimethylacrylate, Tetramethylacrylate, Diacrylate, Triacrylate, Tetraacrylate.

Besonders bevorzugt sind Diene, Triene, Tetraene der Formel

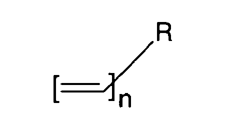

Dimethylacrylate, Trimethylycrylate, Tetramethylacrylate der Formel

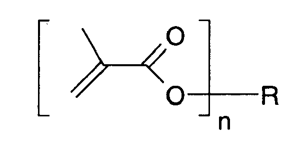

Diacrylate, Triacrylate, Tetraacrylate der Formel 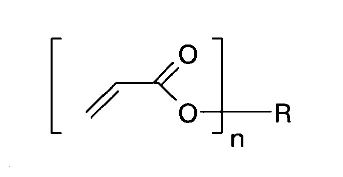 worin
- R: eine C1-C15-Alkylgruppe, C5-C20-Aryl oder Heteroarylgruppe, NR', -SO₂, PR', Si(R')₂ bedeutet, wobei die vorstehenden Reste ihrerseits substituiert sein können,
- R': unabhängig voneinander Wasserstoff, eine C1-C15-Alkylgruppe, C1-C15-Alkoxygruppe, C5-C20-Aryl oder Heteroarylgruppe bedeutet und
- n: mindestens 2 ist.

Bei den Substituenten des vorstehenden Restes R handelt es sich vorzugsweise um Halogen, Hydroxyl, Carboxy, Carboxyl, Carboxylester, Nitrile, Amine, Silyl, Siloxan Reste.

Besonders bevorzugte Vernetzer sind Allylmethacrylat, Ethylenglykoldimethacrylat, Diethylenglykoldimethacrylat, Triethylenglykoldimethacrylat, Tetra- und Polyethylenglykoldimethacrylat, 1,3-Butandioldimethacrylat, Glycerindimethacrylat, Diurethandimethacrylat, Trimethylpropantrimethacrylat, Epoxyacrylate, beispielsweise Ebacryl, N',N-Methylenbisacrylamid, Carbinol, Butadien, Isopren, Chloropren, Divinylbenzol und/oder Bisphenol-A-dimethylacrylat. Diese Verbindungen sind beispielsweise von Sartomer Company Exton, Pennsylvania unter den Bezeichnungen CN-120, CN104 und CN-980 kommerziell erhältlich.

Der Einsatz von Vernetzern ist optional, wobei diese Verbindungen üblich im Bereich zwischen 0,05 bis 30 Gew.-%, vorzugsweise 0,1 bis 20 Gew.-%, besonders bevorzugt 1 und 10 Gew.-%, bezogen auf das Gewicht der Membran, eingesetzt werden können.

Die vernetzenden Monomere können nach der Hydrolyse auf und in die Membran eingebracht werden. Dies kann mittels an sich bekannter Maßnahmen (z.B. Sprühen, Tauchen etc.) die aus dem Stand der Technik bekannt sind, erfolgen.

Gemäß einem besonderen Aspekt der vorliegenden Erfindung können die Phosphonsäure- und/oder Sulfonsäuregruppen umfassenden Monomere bzw. die vernetzenden Monomere polymerisiert werden, wobei die Polymerisation vorzugsweise radikalisch erfolgt. Die Radikalbilduny kann thermisch, photochemisch, chemisch und/oder elektrochemisch erfolgen.

Beispielsweise kann eine Starterlösung, die mindestens eine zur Bildung von Radikalen befähigte Substanz enthält, der Hydrolyseflüssigkeit beigefügt werden. Des Weiteren kann eine Starterlösung auf die Membran nach der Hydrolyse aufgebracht werden. Dies kann mittels an sich bekannter Maßnahmen (z.B. Sprühen, Tauchen etc.) die aus dem Stand der Technik bekannt sind, erfolgen.

Geeignete Radikalbildner sind unter anderem Azoverbindungen, Peroxyverbindungen, Persulfatverbindungen oder Azoamidine. Nicht limitierende Beispiele sind Dibenzoylperoxid, Dicumolperoxid, Cumolhydroperoxid, Diisopropylperoxidicarbonat, Bis(4-t-butylcyclohexyl)peroxidicarbonat, Dikaliumpersulfat, Ammoniumperoxidisulfat, 2,2'-Azobis(2-methylpropionitril) (AIBN), 2,2'-Azobis-(isobuttersäureamidin)hydrochlorid, Benzpinakol, Dibenzylderivate, Methylethylenketonperoxid, 1,1-Azobiscyclohexancarbonitril, Methylethylketonperoxid, Acetylacetonperoxid, Dilaurylperoxid, Didecanoylperoxid, tert.-Butylper-2-ethylhexanoat, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoylperoxy)-2,5-dimethylhexan, tert.-Butylperoxy-2-ethylhexanoat, tert.-Butylperoxy-3,5,5-trimethylhexanoat, tert.-Butylperoxyisobutyrat, tert.-Butylperoxyacetat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, sowie die von der Firma DuPont unter dem Namen ®Vazo, beispielsweise ®Vazo V50 und ®Vazo WS erhältlichen Radikalbildner.

Des Weiteren können auch Radikalbildner eingesetzt werden, die bei Bestrahlung Radikale bilden. Zu den bevorzugten Verbindungen gehören unter anderem α,α-Diethoxyacetophenon (DEAP, Upjon Corp), n-Butylbenzoinether (®Trigonal-14, AKZO) und 2,2-Dimethoxy-2-phenylacetophenon (®Igacure 651) und 1-Benzoylcyclohexanol (®Igacure 184), Bis(2,4,6-trimethylbenzoyl)-phenylphosphinoxid (®Irgacure 819) und 1-[4-(2-Hydroxyethoxy)phenyl]-2-hydroxy-2-phenylpropan-1-on (®Irgacure 2959), die jeweils von der Fa. Ciba Geigy Corp. kommerziell erhältlich sind.

Üblicherweise werden zwischen 0,0001 und 5 Gew.-%, insbesondere 0,01 bis 3 Gew.-% (bezogen auf das Gewicht der radikalisch polymerisierbaren Monomere; Phosphonsäure- und/oder Sulfonsäuregruppen umfassenden Monomere bzw. der vernetzenden Monomere) an Radikalbildner zugesetzt. Die Menge an Radikalbildner kann je nach gewünschten Polymerisationsgrad variiert werden.

Die Polymerisation kann auch durch Einwirken von IR bzw. NIR (IR = InfraRot, d. h. Licht mit einer Wellenlänge von mehr als 700 nm; NIR = Nahes IR, d. h. Licht mit einer Wellenlänge im Bereich von ca. 700 bis 2000 nm bzw. einer Energie im Bereich von ca. 0.6 bis 1.75 eV) erfolgen.

Die Polymerisation kann auch durch Einwirken von UV-Licht mit einer Wellenlänge von weniger als 400 nm erfolgen. Diese Polymerisationsmethode ist an sich bekannt und beispielsweise in Hans Joerg Elias, Makromolekulare Chemie, 5.Auflage, Band 1, s.492-511; D. R. Arnold, N. C. Baird, J. R. Bolton, J. C. D. Brand, P. W. M Jacobs, P.de Mayo, W. R. Ware, Photochemistry-An Introduction, Academic Press , New York und M.K.Mishra, Radical Photopolymerization of Vinyl Monomers, J. Macromol. Sci.-Revs. Macromol. Chem. Phys. C22(1982-1983) 409 beschrieben.

Die Polymerisation kann auch durch Einwirken von β-,γ- und/oder Elektronen Strahlen erzielt werden. Gemäß einer besonderen Ausführungsform der vorliegenden Erfindung wird eine Membran mit einer Strahlungsdosis im Bereich von 1 bis 300 kGy, bevorzugt von 3 bis 200 kGy und ganz besonders bevorzugt von 20 bis 100 kGy bestrahlt.

Die Polymerisation der Phosphonsäure- und/oder Sulfonsäuregruppen umfassenden Monomere bzw. der vernetzenden Monomere erfolgt vorzugsweise bei Temperaturen oberhalb Raumtemperatur (20°C) und kleiner 200°C, insbesondere bei Temperaturen zwischen 40°C und 150°C, besonders bevorzugt zwischen 50°C und 120°C. Die Polymerisation erfolgt vorzugsweise unter Normaldruck, kann aber auch unter Einwirkung von Druck erfolgen. Die Polymerisation führt zu einer Verfestigung des flächigen Gebildes, wobei diese Verfestigung durch Mikrohärtemessung verfolgt werden kann. Vorzugsweise beträgt die durch die Polymerisation bedingte Zunahme der Härte mindestens 20%, bezogen auf die Härte einer entsprechend hydrolysierten Membran ohne Polymerisation der Monomere.

Gemäß einem besonderen Aspekt der vorliegenden Erfindung ist das molare Verhältnis der molaren Summe aus Phosphorsäure, Polyphosphorsäure und der Hydrolyseprodukte der Polyphosphorsäure zur Anzahl der Mole der Phosphonsäuregruppen und/oder Sulfonsäuregruppen in den durch Polymerisation von Phosphonsäuregruppen umfassenden Monomere und/oder Sulfonsäuregruppen umfassenden Monomere erhältlichen Polymere, vorzugsweise größer oder gleich 1:2, insbesondere größer oder gleich 1:1, und besonders bevorzugt größer oder gleich 2:1.

Vorzugsweise liegt das molare Verhältnis der molaren Summe aus Phosphorsäure, Polyphosphorsäure und der Hydrolyseprodukte der Polyphosphorsäure zur Anzahl der Mole der Phosphonsäuregruppen und/oder Sulfonsäuregruppen in den durch Polymerisation von Phosphonsäuregruppen umfassenden Monomere und/oder Sulfonsäuregruppen umfassenden Monomere erhältlichen Polymere im Bereich von 1000:1 bis 3:1, insbesondere 100:1 bis 5:1 und besonders bevorzugt 50:1 bis 10:1.

Das Molverhältnis kann mit üblichen Methoden bestimmt werden. Hierzu können insbesondere spektroskopische Verfahren, beispielsweise die NMR-Spektroskopie eingesetzt werden. Hierbei ist zu bedenken, dass die Phosphonsäuregruppen in der formalen Oxidationsstufe 3 und der Phosphor in Phosphorsäure, Polyphosphorsäure bzw. Hydrolyseprodukte hiervon in der Oxidationsstufe 5 vorliegen.

Je nach gewünschten Polymerisationsgrad ist das flächige Gebilde, welches nach der Polymerisation erhalten wird, eine selbsttragende Membran. Bevorzugt beträgt der Polymerisationsgrad mindestens 2, insbesondere mindestens 5, besonders bevorzugt mindestens 30 Wiederholeinheiten, insbesondere mindestens 50 Wiederholeinheiten, ganz besonders bevorzugt mindestens 100 Wiederholeinheiten. Dieser Polymerisationsgrad bestimmt sich über das Zahlenmittel des Molekulargewichts Mₙ, das durch GPC-Methoden ermittelt werden kann. Aufgrund der Probleme die in der Membran enthaltenen Phosphonsäuregruppen umfassenden Polymere ohne Abbau zu isolieren, wird dieser Wert anhand einer Probe bestimmt, die durch Polymerisation von Phosphonsäuregruppen umfassenden Monomeren ohne Zusatz von Polymer durchgeführt wird. Hierbei wird der Gewichtsanteil an Phosphonsäuregruppen umfassenden Monomere und an Radikalstarter im Vergleich zu den Verhältnissen der Herstellung der Membran konstant gehalten. Der Umsatz, der bei einer Vergleichspolymerisation erzielt wird, ist vorzugsweise größer oder gleich 20%, insbesondere größer oder gleich 40% und besonders bevorzugt größer oder gleich 75%, bezogen auf die eingesetzten Phosphonsäuregruppen umfassenden Monomere.

Die Hydrolyseflüssigkeit umfasst Wasser, wobei die Konzentration des Wassers im Allgemeinen nicht besonders kritisch ist. Gemäß einem besonderen Aspekt der vorliegenden Erfindung umfasst die Hydrolyseflüssigkeit 5 bis 80 Gew.-%, vorzugsweise 8 bis 70 Gew.-% und besonders bevorzugt 10 bis 50 Gew.-% Wasser. Die Wassermenge, die in den Sauerstoffsäuren formal enthalten ist, wird bei dem Wassergehalt der Hydrolyseflüssigkeit nicht berücksichtigt.

Von den zuvor genannten Säuren sind Phosphorsäure und/oder Schwefelsäure besonders bevorzugt, wobei diese Säuren insbesondere 5 bis 70 Gew.-%, vorzugsweise 10 bis 60 Gew.-% und besonders bevorzugt 15 bis 50 Gew.-% Wasser umfassen.

Die partielle Hydrolyse der Polyphosphorsäure in Schritt D) führt zu einer Verfestigung der Membran aufgrund eines Sol/Gel Übergangs. Damit verbunden ist auch eine Abnahme der Schichtdicke auf 15 bis 3000 µm, vorzugsweise zwischen 20 und 2000 µm, insbesondere zwischen 20 und 1500 µm; die Membran ist selbsttragend.

Die in der Polyphosphorsäureschicht gemäß Schritt B) vorliegenden intra- und intermolekularen Strukturen (Interpenetrierende Netzwerke IPN) führen in Schritt C) zu einer geordneten Membranbildung, welche für die besonderen Eigenschaften der gebildeten Membran verantwortlich zeichnet.

Die obere Temperaturgrenze der Behandlung gemäß Schritt D) beträgt in der Regel 150°C. Bei extrem kurzer Einwirkung von Feuchtigkeit, beispielsweise von überhitztem Dampf kann dieser Dampf auch heißer als 150°C sein. Wesentlich für die Temperaturobergrenze ist die Dauer der Behandlung.

Die partielle Hydrolyse (Schritt D) kann auch in Klimakammern erfolgen bei der unter definierter Feuchtigkeitseinwirkung die Hydrolyse gezielt gesteuert werden kann. Hierbei kann die Feuchtigkeit durch die Temperatur bzw. Sättigung der kontaktierenden Umgebung beispielsweise Gase wie Luft, Stickstoff, Kohlendioxid oder andere geeignete Gase, oder Wasserdampf gezielt eingestellt werden. Die Behandlungsdauer ist abhängig von den vorstehend gewählten Parametern.

Weiterhin ist die Behandlungsdauer von den Membrandicken abhängig.

In der Regel beträgt die Behandlungsdauer zwischen wenigen Sekunden bis Minuten, beispielsweise unter Einwirkung von überhitztem Wasserdampf, oder bis hin zu ganzen Tagen, beispielsweise an der Luft bei Raumtemperatur und geringer relativer Luftfeuchtigkeit. Bevorzugt beträgt die Behandlungsdauer zwischen 10 Sekunden und 300 Stunden, insbesondere 1 Minute bis 200 Stunden.

Wird die partielle Hydrolyse bei Raumtemperatur (20°C) mit Umgebungsluft einer relativen Luftfeuchtigkeit von 40-80% durchgeführt beträgt die Behandlungsdauer zwischen 1 und 200 Stunden.

Die gemäß Schritt D) erhaltene Membran kann selbsttragend ausgebildet werden, d.h. sie kann vom Träger ohne Beschädigung gelöst und anschließend gegebenenfalls direkt weiterverarbeitet werden.

Über den Grad der Hydrolyse, d.h. die Dauer, Temperatur und Umgebungsfeuchtigkeit, ist die Konzentration an Phosphorsäure und damit die Leitfähigkeit der Polymermembran einstellbar. Die Konzentration der Phosphorsäure wird als Mol Säure pro Mol Wiederholungseinheit des Polymers angegeben. Durch das Verfahren umfassend die Schritte A) bis D) können Membranen mit einer besonders hohen Phosphorsäurekonzentration erhalten werden. Bevorzugt ist eine Konzentration (Mol Phosphorsäure bezogen auf eine Wiederholeinheit der Formel (I), beispielsweise Polybenzimidazol) zwischen 10 und 50, insbesondere zwischen 12 und 40. Derartig hohe Dotierungsgrade (Konzentrationen) sind durch Dotieren von Polyazolen mit kommerziell erhältlicher ortho-Phosphorsäure nur sehr schwierig bzw. gar nicht zugänglich.

Gemäß einer Abwandlung des zur beschriebenen Verfahrens, bei dem dotierte Polyazolfolien durch die Verwendung von Polyphosphorsäure hergestellt werden, kann die Herstellung dieser Folien auch durch ein Verfahren erfolgen umfassend die Schritte
1) Umsetzung von einem oder mehreren aromatischen Tetra-Amino-Verbindungen mit einer oder mehreren aromatischen Carbonsäuren bzw. deren Estern, die mindestens zwei Säuregruppen pro Carbonsäure-Monomer enthalten, oder von einer oder mehreren aromatischen und/oder heteroaromatischen Diaminocarbonsäuren in der Schmelze bei Temperaturen von bis zu 350°C, vorzugsweise bis zu 300°C,
2) Lösen des gemäß Schritt 1) erhaltenen festen Prä-Polymeren in Polyphosphorsäure,
3) Erwärmen der Lösung erhältlich gemäß Schritt 2) unter Inertgas auf Temperaturen von bis zu 300°C, vorzugsweise bis zu 280°C unter Ausbildung des gelösten Polyazol-Polymeren .
4) Bilden einer Membran unter Verwendung der Lösung des Polyazol-Polymeren gemäß Schritt 3) auf einem Träger und
5) Behandlung der in Schritt 4) gebildeten Membran bis diese selbsttragend ist.

Die unter den Punkten 1) bis 5) dargestellten Verfahrensschritte wurden zuvor für die Schritte A) bis D) näher erläutert, wobei hierauf, insbesondere im Hinblick auf bevorzugte Ausführungsformen Bezug genommen wird.

Eine Membran, insbesondere eine Membran auf Basis von Polyazolen, kann durch Einwirken von Hitze in Gegenwart von Luftsauerstoff an der Oberfläche noch vernetzt werden. Diese Härtung der Membranoberfläche verbessert die Eigenschaften der Membran zusätzlich. Hierzu kann die Membran auf eine Temperatur von mindestens 150°C, vorzugsweise mindestens 200°C und besonders bevorzugt mindestens 250°C erwärmt werden. Die Sauerstoffkonzentration liegt bei diesem Verfahrensschritt üblich im Bereich von 5 bis 50 Vol.-%, vorzugsweise 10 bis 40 Vol.-%, ohne dass hierdurch eine Beschränkung erfolgen soll.

Die Vernetzung kann auch durch Einwirken von IR bzw. NIR (IR = InfraRot, d. h. Licht mit einer Wellenlänge von mehr als 700 nm; NIR = Nahes IR, d. h. Licht mit einer Wellenlänge im Bereich von ca. 700 bis 2000 nm bzw. einer Energie im Bereich von ca. 0.6 bis 1.75 eV) erfolgen. Eine weitere Methode ist die Bestrahlung mit β-Strahlen. Die Strahlungsdosis beträgt hierbei zwischen 5 und 200 kGy.

Je nach gewünschtem Vernetzungsgrad kann die Dauer der Vernetzungsreaktion in einem weiten Bereich liegen. Im Allgemeinen liegt diese Reaktionszeit im Bereich von 1 Sekunde bis 10 Stunden, vorzugsweise 1 Minute bis 1 Stunde, ohne dass hierdurch eine Beschränkung erfolgen soll.

Besonders bevorzugte Polymermembranen zeigen eine hohe Leistung. Diese begründet sich insbesondere durch eine verbesserte Protonenleitfähigkeit. Diese beträgt bei Temperaturen von 120°C mindestens 1 mS/cm, vorzugsweise mindestens 2 mS/cm, insbesondere mindestens 5 mS/cm. Diese Werte werden hierbei ohne Befeuchtung erzielt.

Die spezifische Leitfähigkeit wird mittels Impedanzspektroskopie in einer 4-Pol-Anordnung im potentiostatischen Modus und unter Verwendung von Platinelektroden (Draht, 0,25 mm Durchmesser) gemessen. Der Abstand zwischen den stromabnehmenden Elektroden beträgt 2 cm. Das erhaltene Spektrum wird mit einem einfachen Modell bestehend aus einer parallelen Anordnung eines Ohm'schen Widerstandes und einer Kapazität ausgewertet. Der Probenquerschnitt der phosphorsäuredotierten Membran wird unmittelbar vor der Probenmontage gemessen. Zur Messung der Temperaturabhängigkeit wird die Messzelle in einem Ofen auf die gewünschte Temperatur gebracht und über ein, in unmittelbarer Probennähe positioniertes, Pt-100 Thermoelement geregelt. Nach Erreichen der Temperatur wird die Probe vor dem Start der Messung 10 Minuten auf dieser Temperatur gehalten.

### Gasdiffusionsschicht

Die erfindungsgemäße Membran-Elektroden-Einheit weist zwei Gasdiffusionsschichten auf, die durch die Polymer-Elektrolytmembran getrennt sind.

Als Ausgangsmaterial für die erfindungsgemäßen Gasdiffusionsschichten werden sehr leichte, nicht notwendigerweise elektrisch leitfähige aber mechanisch stabile Stützmaterialien, die Fasern z.B. in Form von Vliesen, Papieren oder Geweben enthalten, verwendet. Zu diesen gehören beispielsweise Graphitfaser-Papiere, Kohlefaser-Papiere, Graphitgewebe und/oder Papiere, die durch Zugabe von Ruß leitfähig gemacht wurden. Durch diese Schichten wird eine feine Verteilung der Gas- und/oder Flüssigkeitsströme erzielt

Vorzugsweise enthält das Stützmaterial Kohlefasern, Glasfasern oder Fasern enthaltend organische Polymere, beispielsweise Polypropylen, Polyester (Polyethylentherephtalat), Polyphenylensulfid oder Polyetherketone, um nur einige zu nennen. Besonders gut geeignet sind dabei Materialien mit einem Flächengewicht < 150 g/m², vorzugsweise mit einem Flächengewicht im Bereich von 10 bis 100 g/m².

Bei Verwendung von Kohlenstoffmaterialien als Stützmaterialien eignen sich insbesondere Vliese aus carbonisierten oder graphitisierten Fasern mit Flächengewichten im bevorzugten Bereich. Die Verwendung solcher Materialien bietet zwei Vorteile: Erstens sind sie sehr leicht und zweitens haben sie eine hohe offene Porosität.

Die offene Porosität der bevorzugt verwendeten Stützmaterialien liegt im Bereich von 20 bis 99,9%, bevorzugt 40 bis 99 %, so dass sie sehr einfach mit anderen Materialien gefüllt werden können und somit die Porosität, Leitfähigkeit und die Hydrophobizität der fertigen Gasdiffusionslage durch die Füllmaterialien gezielt eingestellt werden kann und zwar über die gesamte Dicke der Gasdiffusionslage.

Diese Schicht weist im Allgemeinen eine Dicke im Bereich von 80µm bis 2000µm, insbesondere 100µm bis 1000µm und besonders bevorzugt 150µm bis 500µm auf.

Die Herstellung von Gasdiffusionsschichten bzw. Gasdiffusionselektroden ist beispielsweise in WO 97/20358 ausführlich beschrieben. Die darin aufgezeigten Herstellverfahren sind auch Bestandteil der vorliegenden Beschreibung.

Zur Herabsetzung der Oberflächenspannung können Materialien (Zusätze oder Detergentien), wie in WO 97/20358 ausführlich beschrieben, beigegeben werden. Zusätzlich kann die Hydrophobizität der Gasdiffusionsschicht durch Verwendung von perfluorierten Polymeren in Verbindung mit nichtfluorierten Bindern eingestellt werden. Anschließend werden die ausgerüsteten Gasdiffusionsschichten getrocknet und thermisch nachbehandelt, beispielsweise durch Sinterung bei Temperaturen von oberhalb 200°C.

Des Weiteren ist es möglich, dass die Gasdiffusionsschicht mehrlagig aufgebaut ist. In einer bevorzugten Ausführungsform der Gasdiffusionsschicht weist diese min. 2 voneinander unterscheidbare Lagen auf. Als Obergrenze für mehrlagige Gasdiffusionsschichten sind 4 Lagen zu betrachten. Wird mehr als eine Lage verwendet, ist es zweckmäßig diese Schichten durch einen Preß- oder Laminierschritt bevorzugt bei höherer Temperatur miteinander innig zu verbinden. Durch Einsatz von mehrlagigen Gasdiffusionsschichten ist es möglich vorkonfektionierte Lagen herzustellen, mittels derer Gradienten an offener Porosität und/oder Hydrophobizität eingestellt werden können. Derartige Gradienten können auch durch mehrfaches, aufeinander folgendes Beschichten bzw. Imprägnieren erzeugt werden, was aber in der Regel aufwendiger zu realisieren ist.

Gemäß einer besonderen Ausführungsform kann mindestens eine der Gasdiffusionsschichten aus einem kompressiblen Material bestehen. Im Rahmen der vorliegenden Erfindung ist ein kompressibles Material durch die Eigenschaft gekennzeichnet, dass die Gasdiffusionsschicht ohne Verlust ihrer Integrität durch Druck auf die Hälfte, insbesondere auf ein Drittel der ursprünglichen Dicke gepresst werden kann.

Die erfindungsgemäßen Gasdiffusionsschichten besitzen einen niedrigen elektrischen Flächenwiderstand, der im Bereich von < 100 mOhm pro cm², vorzugsweise < 60 mOhm pro cm², liegt.

Diese Eigenschaft weisen im Allgemeinen Gasdiffusionsschicht aus Graphitgewebe und/oder Graphitpapieren, die durch Zugabe von Ruß leitfähig gemacht wurden, auf. Üblicherweise werden die Gasdiffusionsschichten auch durch Zusatz von weiteren Materialien hinsichtlich ihrer Hydrophobizität und Massetransporteigenschaften optimiert. In diesem Zusammenhang werden die Gasdiffusionsschichten mit fluorierten oder teil-fluorierten Materialien, beispielsweise PTFE, ausgerüstet.

### Katalysatorschicht

Die Katalysatorschicht oder Katalysatorschichten enthält oder enthalten katalytisch aktive Substanzen. Zu diesen gehören unter anderem Edelmetalle der Platingruppe, d.h. Pt, Pd, Ir, Rh, Os, Ru, oder auch die Edelmetalle Au und Ag. Des Weiteren können auch Legierungen aller vorgenannten Metalle eingesetzt werden. Weiterhin kann mindestens eine Katalysatorschicht Legierungen der Platingruppenelemente mit unedlen Metallen wie zum Beispiel Fe, Co, Ni, Cr, Mn, Zr, Ti, Ga, V usw. enthalten. Darüber hinaus können auch die Oxide der vorgenannten Edelmetalle und/oder Nicht-Edelmetalle eingesetzt werden.

Die katalytisch aktiven Partikel, die die zuvor genannten Substanzen umfassen, können als Metallpulver, so genanntes schwarzes Edelmetall, insbesondere Platin und/oder Platinlegierungen, eingesetzt werden. Derartige Partikel weisen im allgemeinen eine Größe im Bereich von 5 nm bis 200 nm, vorzugsweise im Bereich von 7 nm bis 100 nm auf. Auch so genannte Nanopartikel finden Anwendung.

Darüber hinaus können die Metalle auch auf einem Trägermaterial eingesetzt werden. Vorzugsweise umfasst dieser Träger Kohlenstoff, der insbesondere in Form von Ruß, Graphit oder graphitisiertem Ruß, eingesetzt werden kann. Weiterhin können auch elektrisch leitfähige Metalloxide, wie zum Beispiel SnOₓ, TiOₓ, oder Phosphate, wie z.B. FePOₓ, NbPOₓ, Zr_{y}(POₓ)_{z} als Trägermaterial verwendet werden. Hierbei kennzeichnen die Indices x, y und z den Sauerstoff- bzw. Metallgehalt der einzelnen Verbindungen, die in einem bekannten Bereich liegen können, da die Übergangsmetalle unterschiedliche Oxidationsstufen einnehmen können.

Der Gehalt dieser geträgerten Metall-Partikel, bezogen auf das Gesamtgewicht der Metall-Träger-Verbindung, liegt im allgemeinen im Bereich von 1 bis 80 Gew.-%, vorzugsweise 5 bis 60 Gew.-% und besonders bevorzugt 10 bis 50 Gew.-%, ohne dass hierdurch eine Beschränkung erfolgen soll. Die Partikelgröße des Trägers, insbesondere die Größe der Kohlenstoffpartikel, liegt vorzugsweise im Bereich von 20 bis 1000 nm, insbesondere 30 bis 100 nm. Die Größe der sich hierauf befindlichen Metallpartikel liegt vorzugsweise im Bereich von 1 bis 20 nm, insbesondere 1 bis 10 nm und besonders bevorzugt 2 bis 6 nm.

Die Größen der unterschiedlichen Partikel stellen Mittelwerte dar und können über Transmissionselektronenmikroskopie oder Pulver-Röntgendiffraktometrie bestimmt werden.

Die zuvor dargelegten katalytisch aktiven Partikel können im Allgemeinen kommerziell erhalten werden.

Neben den bereits kommerziell erhältlichen Katalysatoren bzw. Katalysatorpartikeln können auch Katalysator-Nanopartikel aus platinhaltigen Legierungen, insbesondere auf Basis von Pt, Co und Cu bzw. Pt, Ni und Cu eingesetzt werden, bei denen die Partikel in der äußeren Schale einen höheren Pt-Gehalt aufweisen als im Kern. Derartige Partikel wurden von P. Strasser et al. in der Angewandten Chemie 2007 beschrieben.

Des Weiteren kann die katalytisch aktive Schicht übliche Additive enthalten. Hierzu gehören unter anderem Fluorpolymere wie z.B. Polytetrafluorethylen (PTFE), protonenleitende Ionomere und oberflächenaktive Substanzen.

Gemäß einer besonderen Ausführungsform der vorliegenden Erfindung ist das Gewichtsverhältnis von Fluorpolymer zu Katalysatormaterial, umfassend mindestens ein Edelmetall und gegebenenfalls ein oder mehrere Trägermaterialien, größer als 0,1, wobei dieses Verhältnis vorzugsweise im Bereich von 0,2 bis 0,6 liegt.

Gemäß einer besonderen Ausführungsform der vorliegenden Erfindung weist die Katalysatorschicht eine Dicke im Bereich von 1 bis 1000 µm, insbesondere von 5 bis 500, vorzugsweise von 10 bis 300 µm auf. Dieser Wert stellt einen Mittelwert dar, der durch Messung der Schichtdicke im Querschnitt von Aufnahmen bestimmt werden kann, die mit einem Rasterelektronenmikroskop (REM) erhalten werden können.

Nach einer besonderen Ausführungsform der vorliegenden Erfindung beträgt der Edelmetallgehalt der Katalysatorschicht 0,1 bis 10,0 mg/cm², vorzugsweise 0,3 bis 6,0 mg/cm² und besonders bevorzugt 0,3 bis 3,0 mg/cm². Diese Werte können durch Elementaranalyse einer flächigen Probe bestimmt werden.

Die Katalysatorschicht ist im Allgemeinen nicht selbsttragend sondern wird üblich auf die Gasdiffusionsschicht und/oder die Membran aufgebracht. Hierbei kann ein Teil der Katalysatorschicht beispielsweise in die Gasdiffusionsschicht und/oder die Membran diffundieren, wodurch sich Übergangsschichten bilden. Dies kann auch dazu führen, dass die Katalysatorschicht als Teil der Gasdiffusionsschicht aufgefasst werden kann. Die Dicke der Katalysatorschicht ergibt sich aus der Messung der Dicke der Schicht, auf die die Katalysatorschicht aufgebracht wurde, beispielsweise die Gasdiffusionsschicht oder die Membran, wobei diese Messung die Summe der Katalysatorschicht und der entsprechenden Schicht ergibt, beispielsweise die Summe aus Gasdiffusionsschicht und Katalysatorschicht. Die Katalysatorschichten besitzen vorzugsweise Gradienten, d.h. der Gehalt an Edelmetall nimmt zur Membran hin zu, während der Gehalt an hydrophoben Materialen sich umgekehrt verhält.

Für weitere Informationen über Membran-Elektroden-Einheiten wird auf die Fachliteratur, insbesondere auf die Patentanmeldungen WO 01/18894 A2, DE 195 09 748, DE 195 09 749, WO 00/26982, WO 92/15121 und DE 197 57 492 verwiesen. Die in den vorstehend genannten Literaturstellen enthaltene Offenbarung hinsichtlich des Aufbaues und der Herstellung von Membran-Elektroden-Einheiten, sowie der zu wählenden Elektroden, Gasdiffusionslagen und Katalysatoren ist auch Bestandteil der Beschreibung.

### Elektrode

Insofern die vorstehend beschriebenen Gasdiffusionsschichten auf der der Polymer-Elektrolytmembran bzw. Elektrolytmatrix zugewandten Seite mit einer Katalysatorschicht versehen ist, wird diese auch als Elektrode bezeichnet.

Die Beschichtung der Gasdiffusionsschichten mit dem Katalysatormaterial erfolgt durch bekannte Maßnahmen, insbesondere wie in WO 97/20358 ausführlich beschrieben. Die darin aufgezeigten Herstellverfahren sind auch Bestandteil der vorliegenden Beschreibung.

### Dichtungen

Die im Rahmen des erfindungsgemäßen Verfahrens eingesetzten bzw. erzeugten Dichtungen, werden entweder in einem separatem Schritt hergestellt und aufgebracht oder aber direkt auf dem umlaufenden Rand der Gasdiffusionsschicht und dem umlaufenden, ggf. erhöhten, Rand der Bipolarplatte erzeugt.

Wesentlich dabei ist, dass die Dichtung in dem gebildeten, konstruktiven inneren Randbereich nach innen übersteht und somit den äußeren Randbereich der Gasdiffusionsschicht bzw. der mit einer Katalysatorschicht versehenen Gasdiffusionsschicht überlappt. Durch diese Überlappung wird die Gasdiffusionsschicht in der Bipolarplatte fixiert, so dass auf weitere Positionier- oder Fixierrahmen verzichtet werden kann. Zudem ist für die Dichtfunktion kein Durchsetzen des Randbereiches der Gasdiffusionsschicht mit Dichtmaterial oder ein Eindringen des Dichtmaterials in den Randbereich der Gasdiffusionsschicht mehr notwendig.

Des Weiteren ist es von Vorteil, wenn die Dichtung eine ausreichende mechanische Stabilität und/oder Integrität aufweist, so dass beispielsweise bei einer späteren Kompression keine Schädigung der Gasdiffusionsschicht und/oder der Membran/Elektrolytmatrix erfolgt. Hierzu kann vorteilhafterweise eine so genannte Hard-Stop-Funktion in die Dichtung integriert werden. Insbesondere wenn die Dichtung auf einer Bipolarplatte ohne erhöhten Rand erfolgt, ist diese Ausführungsform bevorzugt.

Die Erzeugung der Dichtung kann in einem separaten Schritt erfolgen oder aber die Dichtung wird direkt auf dem umlaufenden Rand der Gasdiffusionsschicht zur Bipolarplatte erzeugt. Die Bildung der Dichtung kann durch alle bekannten Methoden erfolgen, vorzugsweise durch Aufspritzen von thermoplastischen Elastomeren oder vernetzbaren Kautschuken oder das Auftragen und Vernetzen derselben mittels Druckverfahren.

Die erfindungsgemäßen Dichtungen werden bevorzugt aus schmelzbaren Polymeren bzw. thermisch verarbeitbaren Kautschuken gebildet.

Innerhalb der Kautschuke werden Silikon-Kautschuk (Q), Ethylen-Propylen-DienKautschuk (EPDM), Ethylen-Propylen-Kautschuk (EPM), Isobutylen-Isopren-Kautschuk (IIR) Butadien-Kautschuk (BR), Styrol-Butadien-Kautschuk (SBR), Styrol-Isopren-Kautschuk (SIR), Isopren-Butadien-Kautschuk (IBR), Isopren-Kautschuk (IR), Acrylnitril-Butadien-Kautschuk (NBR), Chloropren-Kautschuk (CR), Acrylat-Kautschuk (ACM) und/oder teilweise hydriertem Kautschuk aus Butadien-Kautschuk (BR), Styrol-Butadien-Kautschuk (SBR), Isopren-Butadien-Kautschuk (IBR), Isopren-Kautschuk (IR), Acrylnitril-Butadien-Kautschuk (NBR), Polyisobutylen-Kautschuk (PIB), Flour-Kautschuk (FPM), Flour-Silikon-Kautschuk (MFQ, FVMQ) bevorzugt.

Des Weiteren werden Fluorpolymere, bevorzugt Poly(tetrafluorethylen-cohexafluorpropylen) FEP, Polyvinylidenfluorid PVDF, Perfluoralkoxypolymer PFA und Poly(tetrafluorethylen-co-perfluoro(methylvinylether)) MFA als Dichtungsmaterial eingesetzt. Diese Polymere sind vielfach kommerziell beispielsweise unter den Handelsbezeichnungen Hostafon®, Hyflon®, Teflon®, Dyneon® und Nowoflon® erhältlich.

Neben den vorstehend genannten Materialien können auch Dichtungsmaterialien auf Basis von Polyimiden eingesetzt werden. Zur Klasse der Polymere auf Basis von Polyimiden gehören auch Polymere, die neben Imid- auch Amid-(Polyamidimide), Ester- (Polyesterimide) u. Ether-Gruppen (Polyetherimide) als Bestandteile der Hauptkette enthalten.

Bevorzugte Polyimide weisen wiederkehrende Einheiten der Formel (VI) auf, 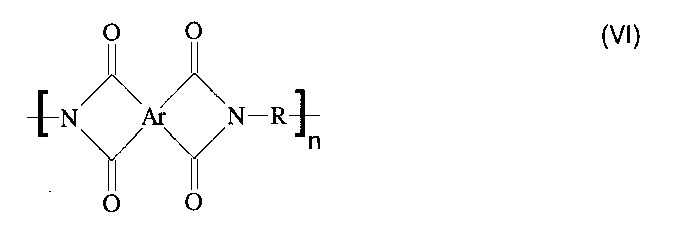 worin der Rest Ar die zuvor genannte Bedeutung hat und der Rest R eine Alkylgruppe oder eine zweibindige aromatische oder heteroaromatische Gruppe mit 1 bis 40 Kohlenstoffatomen darstellt. Bevorzugt stellt der Rest R eine zweibindige aromatische oder heteroaromatische Gruppe dar, die sich von Benzol, Naphthalin, Biphenyl, Diphenylether, Diphenylketon, Diphenylmethan, Diphenyldimethylmethan, Bisphenon, Diphenylsulfon, Chinolin, Pyridin, Bipyridin, Anthracen, Thiadiazol und Phenanthren, die gegebenenfalls auch substituiert sein können, ableitet. Der Index n deutet an, dass die wiederkehrenden Einheiten Teile von Polymeren darstellen.

Derartige Polyimide sind kommerziell unter den Handelsnamen ®Kapton, ®Vespel, ®Toray und ®Pyralin von DuPont sowie ®Ultem von GE Plastics und ®Upilex von Ube Industries erhältlich.

Auch Kombinationen der vorgenannten Materialien mit der Eigenschaftskombination hart/weich sind als Dichtungsmaterial geeignet, insbesondere wenn die vorstehend genannte Hard-Stop Funktion integriert werden soll.

Besonders bevorzugte Dichtungsmaterialien haben eine Shore A Härte von 5 bis 85, insbesondere von 25 bis 80. Die Shore-Härte wird bestimmt gemäß DIN 53505. Des Weiteren ist es von Vorteil, wenn der Druckverformungsrest des Dichtungsmaterials kleiner als 50% beträgt. Der Druckverformungsrest wird bestimmt gemäß DIN ISO 815.

Die Dicke der Dichtungen wird durch verschiedene Faktoren beeinflusst. Ein wesentlicher Faktor besteht darin, wie hoch die Erhöhung im Randbereich der Bipolarplatte gewählt wird. Üblicherweise beträgt die Dicke der erzeugten bzw. aufgebrachten Dichtung 5 µm bis 5000 µm, vorzugsweise 10 µm bis 1000 µm und insbesondere 25 µm bis 150 µm. Insbesondere bei Bipolarplatten ohne erhöhten Randbereich kann die Dicke auch mehr betragen.

Die Dichtungen können auch mehrschichtig aufgebaut werden. In dieser Ausführungsform werden verschiedene Schichten unter Verwendung von geeigneten Polymeren miteinander verbunden, wobei insbesondere

Fluorpolymere gut geeignet sind eine entsprechende Verbindung herzustellen. Geeignete Fluorpolymere sind in der Fachwelt bekannt. Hierzu gehören unter anderem Polyfluortetraethylen (PTFE) und Poly(tetrafluorethylen-cohexafluorpropylen) (FEP). Die sich auf den zuvor beschriebenen Dichtungsschichten befindliche Schicht aus Fluorpolymeren weist im Allgemeinen eine Dicke von mindestens 0,5 µm, insbesondere von mindestens 2,5 µm auf. Sofern geschäumte Fluorpolymere aufgebracht werden, kann die Dicke der Schicht 5 bis 250 µm, bevorzugt 10 bis 150 µm betragen.

Die vorstehend beschriebenen Dichtungen bzw. Dichtungsmaterialien sind dergestalt dass sie die Gasdiffusionsschicht in der Aussparung, die zusammen mit der Bipolarplatte gebildet wird, fixieren. Hierzu ist es von Vorteil, wenn die Dichtung den äußeren Randbereich der Gasdiffusionsschicht umlaufend überlappt. Bevorzugt beträgt die Überlappung der Dichtung mit dem Randbereich der Gasdiffusionsschicht bezogen auf den äußersten Rand der Gasdiffusionsschicht 0,1 bis 5 mm, bevorzugt 0,1 bis 3 mm. Eine stärkere Überlappung ist möglich, führt jedoch zu einem starken Verlust an katalytisch aktiver Fläche. Aus diesem Grund muss das Maß der Überlappung kritisch abgewogen werden, so dass nicht unnötig viel katalytisch aktive Fläche abgedeckt wird.

Es ist zwar von Vorteil, wenn die Dichtung den Randbereich der Gasdiffusionsschicht umlaufend überlappt, es kann jedoch, insbesondere vor dem Hintergrund der aktiven katalytischen Fläche, auch Unterbrechungen in dem umlaufenden, mit dem Randbereich der Gasdiffusionsschicht überlappenden, Dichtungsrand geben. Wesentlich hierbei ist, dass die Fixierungsfunktion der Gasdiffusionsschicht durch die Dichtung gewährleistet bleibt.

### Bipolarplatten

Die im Rahmen der vorliegenden Erfindung eingesetzten Bipolarplatten oder auch Separatorplatten sind typischerweise mit Medienkanälen (Strömungsfeldrinnen) versehen, um die Verteilung der Reaktanden und anderen brennstoffzellentypischen Fluiden, wie zum Beispiel Kühlflüssigkeiten, zu ermöglichen.

Die Bipolarplatten werden üblicherweise aus elektrisch leitfähigen Materialien gebildet; bei diesen kann es sich um metallische oder um nicht-metallische Materialien handeln.

Insofern die Bipolarplatten aus nicht-metallischen Materialien aufgebaut werden, sind so genannte Composite-Materialien bevorzugt. Bei Composite-Materialien handelt es sich um einen Verbundwerkstoff aus einem Matrixmaterial, welcher mit elektrisch leitfähigen Füllstoffen versehen wird. Als Matrixmaterial sind bevorzugt polymere Materialien, insbesondere organische Polymere geeignet. Je nach Betriebstemperatur der Brennstoffzelle können auch Hochleistungspolymere, insbesondere thermisch stabile Polymere, erforderlich werden. Je nach Einsatzgebiet werden Polymere eingesetzt, deren Dauergebrauchstemperatur mindestens 80°C, bevorzugt mindestens 120°C, insbesondere bevorzugt mindestens 180°C, beträgt.

Besonders bevorzugt werden thermoplastische Kunststoffe, insbesondere Polypropylen (PP), Polyvinylidenfluorid (PVDF), Polytetrafluorethylen (PTFE), Polyphenylensulfid (PPS) und flüssigkristalline Polymere (LCP) eingesetzt, wobei diese auch als Compounds, d.h. in Mischung mit anderen Polymeren bzw. typischen Zusatzstoffen, eingesetzt werden. Neben den thermoplastischen Kunststoffen sind auch duroplastische Kunststoffe und Harze bevorzugt. Insbesondere werden Phenolharze (PF), Melaninharze (MF), Polyester (UP) und Epoxydharze (EP) eingesetzt.

Als elektrisch leitfähige Füllstoffe werden partikelförmige Stoffe eingesetzt, die eine möglichst homogene Verteilung in der Matrix ermöglichen. Bevorzugt besitzen diese Füllstoffe eine Bulkleitfähigkeit von mindestens 10 mS/cm. Besonders bevorzugt werden Kohlenstoffe, Graphite und Ruße eingesetzt. Zur besseren Benetzbarkeit mit dem Matrixmaterial können diese noch behandelt sein. Die Partikelgröße unterliegt keiner besonderen Einschränkung, muss aber eine Fertigung derartiger Bipolarplatten ermöglichen. Neben den vorstehend genannten elektrisch leitfähigen Füllstoffen können die Matrixmaterialien noch mit weiteren Zusatzstoffen versetzt werden, welche die Anwendungseigenschaften verbessern sollen. Auch Faserverstärkungen sind möglich, insbesondere wenn die mechanische Beanspruchung ansonsten nicht sichergestellt werden kann.

Die Herstellung derartiger Bipolarplatten erfolgt vorzugsweise mittels geeigneter Formgebungsmethoden, insbesondere mittels Spritzguss-Techniken sowie Spritzpräge- und Prägetechniken.

Neben den Medienkanälen können die Bipolarplatten auch weitere Kanäle bzw. Öffnungen oder Bohrungen aufweisen, durch die beispielsweise Kühlmittel bzw. Reaktionsgase zu- und abgeführt werden.

Die Dicke der nicht-metallischen Bipolarplatten liegt bevorzugt im Bereich von 0,3 bis 10 mm, insbesondere im Bereich von 0,5 bis 5 mm und besonders bevorzugt im Bereich von 0,5 bis 2 mm. Die Leitfähigkeit der nicht-metallischen Bipolarplatten ist größer oder gleich 25 S/cm.

Insofern die Bipolarplatten aus metallischen Materialien aufgebaut werden, sind kostengünstigere Gesamtkonstruktionen möglich. Der Aufbau solcher metallischer Bipolarplatten unterliegt keiner wesentlichen Einschränkung.

Als metallische Materialien sind korrosions- und säurebeständige Stähle bevorzugt, insbesondere auf Basis von V2A- und V4A-Stählen sowie aus Nickelbasislegierungen. Des Weiteren bevorzugt sind plattierte oder beschichtete Metalle, insbesondere solche mit korrosionsbeständigen Oberflächen aus Edelmetallen, Nickel, Ruthenium, Niob, Tantal, Chrom, Kohlenstoff, sowie keramisch beschichtete Metalle, insbesondere Beschichtungen aus CrN, TiN, TiAlN, komplexen Nitriden, Carbiden, Siliziden und Oxiden von Metallen und Übergangsmetallen.

Daneben können die metallischen Bipolarplatten zusätzliche derartige Beschichtungen aufweisen, die einerseits den elektrischen Flächenwiderstand der Grenzfläche Gasdiffusionsschicht/Bipolarplatte verringern oder aber die chemische und/oder physikalische Resistenz der Bipolarplatte gegen die in Brennstoffzellen vorkommenden bzw. gebildeten Medien erhöhen.

Der Aufbau metallischer Bipolarplatten kann aus Einzelplatten erfolgen, wodurch es in einfacher Art und Weise möglich ist, Hohlräume für Kühlmittel bzw. Reaktionsmedien zu bilden, die zu- und abgeführt werden müssen. Das Verbinden der Einzelplatten kann durch stoffschlüssige Verfahren wie z.B. Schweißen oder Löten erfolgen. Soweit erforderlich werden die Hohlräume zueinander zusätzlich abgedichtet, z.B. durch weitere Innenbeschichtungen, so dass Undichtigkeiten vermieden werden.

Insofern kühllagenfreie Brennstoffzellensysteme aufgebaut werden, bzw. solche bei denen mehrere Einzelzellen des Brennstoffzellenstacks keine Kühlung benötigen, können die Bipolarplatten bzw. einzelne Bipolarplatten im Stack auch aus nur einer metallischen bzw. nicht-metallischen Einzelplatte gefertigt werden.

Der Aufbau und die Fertigung geeigneter metallischer Bipolarplatten wird insbesondere in DE-A-10250991, WO 2004/036677, WO 2004/105164, WO 2005/081614, WO 2005/096421 und WO 2006/037661 ausführlich beschrieben. Die darin aufgezeigten Aufbauten und Fertigungsmethoden sind auch Bestandteil der vorliegenden Erfindung und Beschreibung.

Die Dicke der metallischen Bipolarplatten liegt bevorzugt im Bereich von 0,03 bis 1 mm, insbesondere im Bereich von 0,05 bis 0,5 mm und besonders bevorzugt im Bereich von 0,05 bis 0,15 mm.

Die im Rahmen der vorliegenden Erfindung eingesetzten Bipolarplatten können einen erhöhten Randbereich aufweisen, so dass der Bereich der Bipolarplatte, welcher die Medienkanäle aufweist, eine Aussparung bildet. Die genaue Höhe des Randbereiches gegenüber der höchsten Erhebung des Bereiches der Bipolarplatte, welcher die Medienkanäle aufweist, ergibt sich durch die Dicke der Gasdiffusionsschicht bzw. der Gasdiffusionsschicht mit Katalysatorschicht. Insofern die Gasdiffusionsschicht bzw. die Gasdiffusionsschicht mit Katalysatorschicht keiner weiteren Kompression bei dem späteren Verpressen unterworfen werden soll, entspricht die Erhöhung des Randbereiches der Bipolarplatte der Dicke der Gasdiffusionsschicht bzw. der Gasdiffusionsschicht mit Katalysatorschicht.

Insofern die Dicke der Gasdiffusionsschicht bzw. der Gasdiffusionsschicht mit Katalysatorschicht größer ist als die Höhe des Randbereiches gegenüber der höchsten Erhebung des Bereiches der Bipolarplatte, welcher die Medienkanäle aufweist, ergibt sich bei der späteren Verpressung eine Kompression der Gasdiffusionsschicht. Der Grad der Kompression wird über die Dicke und Verformbarkeit des Dichtungsmaterials bestimmt, so dass das Dichtungsmaterial als Hard-Stop fungiert. Diese Ausführungsform ist insbesondere bei Einsatz von weichen oder leicht verformbaren Polymerelektrolytmembranen von Vorteil, da eine Schädigung der Membran vermieden werden kann.

Es hat sich gezeigt, dass es von Vorteil ist, die Erhöhung des Randbereiches bzw. die Erhöhung durch das rahmenförmige Bauteil so auszugestalten, dass die Gasdiffusionsschicht bzw. die Gasdiffusionsschicht mit Katalysatorschicht eine Kompression von mindestens 3% gegenüber der ursprünglichen Dicke erfährt. Besonders bevorzugt wird die vorstehend beschriebene Erhöhung des Randbereiches so gewählt, dass die Kompression mindestens 5% beträgt. Als Obergrenze wird mithin eine Kompression von mehr als 50%, insbesondere von mehr als 30%, gewählt, wobei diese durch Wahl anderer Parameter auch überschritten werden kann.

Das Verpressen der Bauteile gemäß Schritt e) bzw. f) des Verfahrens erfolgt durch Einwirkung von Druck und Temperatur, so dass die Komponenten innig miteinander verbunden werden. Im Allgemeinen erfolgt dies bei einer Temperatur im Bereich von 10 bis 300°C, insbesondere 20°C bis 200° und mit einem Druck im Bereich von 1 bis 1000 bar, insbesondere von 3 bis 300 bar. Die vorstehende Verpressung kann auch während der Stack-Fertigung und/oder bei der Inbetriebnahme des Brennstoffzellen-Stacks erfolgen.

Die elektrochemische Zelle, insbesondere Brennstoffzellen-Einzelzelle, ist nach Schritt c) betriebsbereit und kann verwendet werden. Zur Fertigung eines Brennstoffzellen-Stacks werden die zugrunde liegenden Brennstoffzellen-Einzelzellen als Stapel angeordnet. Des Weiteren kann die Fertigung des Brennstoffzellen-Stacks durch Verwendung der erfindungsgemäßen Halbzeuge erfolgen, wobei diese zuvor mit der notwendigen Membran versehen werden. Die Membran liegt dabei vorher z.B. als Rollenware vor und kann mit minimalem Materialeinsatz für das jeweilige Bipolarplattendesign individuell passend zugeschnitten werden. Die Herstellung von Brennstoffzellen-Stacks aus Brennstoffzellen-Einzelzellen ist hinreichend bekannt.

Nachfolgend wird die vorliegende Erfindung durch zwei Beispiele näher erläutert, ohne dass hierdurch eine Beschränkung erfolgen soll.

Hierbei zeigen
- Abbildung 1: einen Querschnitt durch ein mit Hilfe des erfindungsgemäßen Verfahrens gefertigtes Halbzeug und
- Abbildung 2: einen Querschnitt durch ein weiteres mit Hilfe des erfindungsgemäßen Verfahrens gefertigtes Halbzeug.

Abbildung 1 zeigt einen Querschnitt durch ein mit Hilfe des erfindungsgemäßen Verfahrens gefertigtes Halbzeug. Die mit Medienkanälen (6) versehene Bipolarplatte (3) weist einen umlaufenden und gegenüber dem flächigen Bereich der Bipolarplatte, welcher die Medienkanäle (6) aufweist, erhöhten Rand (7) auf. Die Medienkanäle (6) sind durch eine Gasdiffusionsschicht (2) abgedeckt. Dabei wird die Gasdiffusionsschicht (2) vom umlaufenden, erhöhten Rand (7) der Bipolarplatte seitlich eingefasst und in horizontaler Richtung fixiert. Die Gasdiffusionsschicht (2) kann an der der Polymerelektrolytmembran (1) bzw. Elektrolytmatrix (1) zugewandten Seite eine Katalysatorschicht aufweisen, welche nicht explizit gezeigt ist. Insofern eine mit einer Katalysatorschicht versehene Polymerelektrolytmembran (1) bzw. Elektrolytmatrix (1) eingesetzt wird, muss die Gasdiffusionsschicht nicht notwendigerweise eine Katalysatorschicht aufweisen. Das umlaufende Konstruktionselement (4) ist in dieser Ausführungsform als Dichtung ausgebildet und wird auf dem erhöhten Rand (7) der Bipolarplatte aufgebracht. Erfindungsgemäß überragt die aufgebrachte Dichtung (4) den erhöhten Rand (7) in seiner horizontalen Ausdehnung in Richtung des flächigen Bereiches der Bipolarplatte. In entgegen gesetzter Richtung muss die aufgebrachte Dichtung nicht unbedingt bündig mit der äußeren Kante der Bipolarplatte abschließen. Dadurch bilden das umlaufende Konstruktionselement (4), der erhöhte Rand (7) der Bipolarplatte und der flächige Bereich der Bipolarplatte eine Aussparung in Form eines Hinterschnittes (5). Die Dichtung (4) überlappt also nach ihrem Auftrag, mit dem Randbereich der Gasdiffusionsschicht (2) und fixiert die Gasdiffusionsschicht in ihrem äußeren Randbereich zusätzlich in vertikaler Richtung: Das umlaufende Konstruktionselement (4) hat im inneren Bereich eine Vertiefung (4a) zur Aufnahme der Polymerelektrolytmembran (1) bzw. Elektrolytmatrix (1). Die Form der Vertiefung ist dabei so gewählt, dass die Vertiefung eine Einfassung für die Polymerelektrolytmembran (1) bzw. Elektrolytmatrix (1) bildet, in welche die Membran (1) eingelegt werden kann. Dabei ist sicherzustellen, dass die Höhe der Membran (1) über den oberen Rand der Einfassung übersteht, derart, dass beim Fügen von mehreren Halbzeugen zu einem Brennstoffzellenstack eine ausreichende Verpressung der Membran (1) gewährleistet ist.

Abbildung 2 zeigt einen Querschnitt durch ein weiteres mit Hilfe des erfindungsgemäßen Verfahrens gefertigtes Halbzeug. Die mit Medienkanälen versehene Bipolarplatte (3) weist keinen erhöhten Rand auf. Die Medienkanäle sind durch eine Gasdiffusionsschicht (2) abgedeckt. Die Gasdiffusionsschicht (2) kann an der der Polymerelektrolytmembran (1) bzw. Elektrolytmatrix (1) zugewandten Seite eine Katalysatorschicht aufweisen, welche nicht explizit gezeigt ist. Insofern eine mit einer Katalysatorschicht versehene Polymerelektrolytmembran (1) bzw. Elektrolytmatrix (1) eingesetzt wird, muss die Gasdiffusionsschicht nicht notwendigerweise eine Katalysatorschicht aufweisen. Das umlaufende Konstruktionselement (3a) ist als Rahmen ausgebildet und besteht aus einem zum Bipolarplattenmaterial kompatiblen Material, vorzugsweise aus dem gleichen Material. Dies ist durch die gestrichelte Linie zwischen Bipolarplatte (3) und dem Konstruktionselement (3a) angedeutet. Das Konstruktionselement (3a) wird nach dem Auflegen der Gasdiffusionsschicht (2) auf den flächigen Bereich der Bipolarplatte, welcher mit den Medienkanälen versehen ist, auf den Randbereich der Bipolarplatte aufgebracht. Das umlaufende Konstruktionselement (3a) ist dabei so ausgestaltet, dass es in seiner horizontalen Ausdehnung in Richtung des flächigen Bereiches der Bipolarplatte einen Überstand bzw. eine Aussparung (5) aufweist. Dadurch überlappt das umlaufende Konstruktionselement nach dem Anbringen auf der Bipolarplatte im überstehenden Bereich mit dem Randbereich der Gasdiffusionsschicht (2) und fixiert die Gasdiffusionsschicht in ihrem äußeren Randbereich zusätzlich in vertikaler Richtung. Das umlaufende, rahmenförmige Konstruktionselement (3a) ist mit einer umlaufenden Dichtung (4) versehen, welche im inneren Bereich eine Vertiefung (4a) zur Aufnahme der Polymerelektrolytmembran (1) bzw. Elektrolytmatrix (1) besitzt. Die Form der Vertiefung ist dabei so gewählt, dass die Vertiefung eine Einfassung für die Polymerelektrolytmembran (1) bzw. Elektrolytmatrix (1) bildet, in welche die Membran (1) eingelegt werden kann. Dabei ist sicherzustellen, dass die Höhe der Membran (1) über den oberen Rand der Einfassung übersteht, derart, dass beim Fügen von mehreren Halbzeugen zu einem Brennstoffzellenstack eine ausreichende Verpressung der Membran (1) gewährleistet ist.

## Patentansprüche

1. Verfahren zur Herstellung einer elektrochemischen Zelle, insbesondere einer Brennstoffzellen-Einzelzelle und/oder eines Brennstoffzellenstacks, enthaltend
(i) mindestens eine protonenleitende Polymerelektrolytmembran (1) oder Elektrolytmatrix (1),
(ii) mindestens eine Katalysatorschicht, die sich jeweils auf beiden Seiten der protonenleitende Polymerelektrolytmembran oder Elektrolytmatrix befindet,
(iii) mindestens eine elektrisch leitfähige Gasdiffusionsschicht (2), die sich jeweils auf der dem Elektrolyten abgewandten Seite der Katalysatorschicht befindet,
(iv) mindestens eine Bipolarplatte mit integrierten Medienkanälen (3), die sich jeweils auf der zur Katalysatorschicht abgewandten Seiten der Gasdiffusionsschicht befindet,
(v) mindestens ein umlaufendes Konstruktionselement (4) im Randbereich der Gasdiffusionsschicht zur Bipolarplatte,
umfassend die folgenden Schritte:
a) Zuführen einer mit Medienkanälen versehenen Bipolarplatte,
b) Zuführen einer Gasdiffusionsschicht oder einer Gasdiffusionsschicht, die auf der der Bipolarplatte abgewandten Seite mindestens eine Katalysatorschicht aufweist und Ablage der Gasdiffusionsschicht auf dem mit den Medienkanälen versehenen Teil der Bipolarplatte, so dass die Medienkanäle vollständig mit der Gasdiffusionsschicht abgedeckt sind,
c) Erzeugen bzw. Anbringen eines umlaufenden Konstruktionselements auf dem Rand bzw. Randbereich der Bipolarplatte,
d) Zuführen und Ablage einer protonenleitenden Polymerelektrolytmembran oder Elektrolytmatrix auf der Oberfläche der Gasdiffusionsschicht bzw. auf der auf der Gasdiffusionsschicht angebrachten Katalysatorschicht
e) Verpressen des gemäß Schritt d) erhaltenen Bauteils mit einem weiteren Bauteil, welches eine Bipolarplatte, eine Gasdiffusionsschicht, ggf. eine Katalysatorschicht und ein umlaufendes Konstruktionselement im Randbereicht der Bipolarplatte aufweist und ebenfalls gemäß den Schritten a), b) und c) hergestellt wurde,
**dadurch gekennzeichnet, dass** das gemäß Schritt c) erzeugte bzw. angebrachte umlaufende Konstruktionselement (4; 3a) im konstruktiven inneren Randbereich übersteht und den äußeren Randbereich der Gasdiffusionsschicht (2) bzw. der mit einer Katalysatorschicht versehenen Gasdiffusionsschicht (2) überlappt und dieselbe in der Aussparung (5), welche die Form eines Hinterschnittes hat und durch das umlaufend angebrachte, im inneren Randbereich überstehende, Konstruktionselement (4; 3a) und die Bipolarplatte (3) gebildet wird, fixiert.

2. Verfahren gemäß Anspruch 1, **dadurch gekennzeichnet, dass** es sich bei dem umlaufenden Konstruktionselement um ein rahmenförmig ausgebildetes Bauteil handelt, welches im konstruktiven inneren Bereich übersteht und die Gasdiffusionsschicht (2) bzw. die mit einer Katalysatorschicht versehene Gasdiffusionsschicht (2) zumindest teilweise überlappt und die Gasdiffusionsschicht in der durch die Bipolarplatte (3) und das umlaufende, rahmenförmige Bauteil (3a) gebildeten Aussparung (5) fixiert:

3. Verfahren gemäß Anspruch 1 oder 2, **dadurch gekennzeichnet, dass** das umlaufende Konstruktionselement aus einem Dichtungsmaterial, insbesondere auf Basis von Polymeren, oder aber aus einem - zum Bipolarplattenmaterial kompatiblen - Material, insbesondere aus dem gleichen Material wie die Bipolarplatte, gebildet wird.

4. Verfahren gemäß Anspruch 1 oder 2, **dadurch gekennzeichnet, dass** das umlaufende Konstruktionselement in (v) aus einem Dichtungsmaterial, insbesondere auf Basis von Polymeren, besteht und die Bipolarplatte einen umlaufenden und gegenüber dem flächigen Bereich der Bipolarplatte, welcher die Gaskanäle aufweist, erhöhten Rand (7) aufweist.

5. Verfahren gemäß Anspruch 4, **dadurch gekennzeichnet, dass** die Oberfläche des umlaufenden, erhöhten Rands (7) und die Oberfläche des flächigen Bereiches der Bipolarplatte mit den Medienkanälen im Wesentlichen parallel zueinander angeordnet sind.

6. Verfahren gemäß Anspruch 3, **dadurch gekennzeichnet, dass** die Dichtung (4) im inneren Randbereich eine Vertiefung (4a) zur Aufnahme der protonenleitenden Polymerelektrolytmembran (1) oder Elektrolytmatrix (1) aufweist.

7. Verfahren gemäß Anspruch 3, **dadurch gekennzeichnet, dass** das umlaufende, rahmenförmige Bauteil (3a) aus einem - zum Bipolarplattenmaterial kompatiblen - Material, insbesondere aus dem gleichen Material wie die Bipolarplatte, gebildet wird und eine aufgebrachte, umlaufende Dichtung das umlaufende, rahmenförmige Bauteil (3a) abdeckt.

8. Verfahren gemäß Anspruch 7, **dadurch gekennzeichnet, dass** die auf dem umlaufenden, rahmenförmigen Bauteil (3a) vorhandene Dichtung (4) im inneren Randbereich eine Vertiefung (4a) zur Aufnahme der protonenleitenden Polymerelektrolytmembran (1) oder Elektrolytmatrix (1) aufweist.

9. Verfahren gemäß mindestens einem der Ansprüche 1 bis 8, **dadurch gekennzeichnet, dass** die Elektrolytmatrix mindestens ein ionenleitendes Material und mindestens eine Matrix aufweist.

10. Verfahren gemäß mindestens einem der Ansprüche 1 bis 8, **dadurch gekennzeichnet, dass** die protonenleitende Polymerelektrolytmembran Säuren umfasst, wobei die Säuren (i) kovalent an Polymere gebunden sein können oder (ii) durch ionische Wechselwirkungen an Polymere gebunden sein können.

11. Verfahren gemäß mindestens einem der Ansprüche 1 bis 10, **dadurch gekennzeichnet, dass** die Bipolarplatte aus elektrisch leitfähigen Materialien gebildet wird.

12. Verfahren gemäß Anspruch 11, **dadurch gekennzeichnet, dass** die Bipolarplatte aus metallischen oder nicht-metallischen Materialien gebildet wird.

13. Verfahren gemäß Anspruch 12, **dadurch gekennzeichnet, dass** die aus nichtmetallischem Material gebildete Bipolarplatte Composite-Materialien umfasst.

14. Verfahren gemäß Anspruch 13, **dadurch gekennzeichnet, dass** das mindestens eine Composite-Material aus einem oder mehreren polymeren Materialien besteht und elektrisch leitfähige Füllstoffe umfasst.

15. Verfahren gemäß Anspruch 12, **dadurch gekennzeichnet, dass** die aus metallischem Material gebildete Bipolarplatte (i) korrosions- und säurebeständige Stähle, insbesondere auf Basis von V2A- und V4A-Stählen sowie aus Nickelbasislegierungen, (ii) plattierte oder beschichtete Metalle, insbesondere solche mit korrosionsbeständigen Oberflächen aus Edelmetallen, Nickel, Ruthenium, Niob, Tantal, Chrom, Kohlenstoff, sowie (iii) keramisch beschichtete Metalle, insbesondere Beschichtungen aus CrN, TiN, TiAIN, komplexen Nitriden, Carbiden, Siliziden und Oxiden von Metallen und Übergangsmetallen, umfasst.

16. Verfahren gemäß Anspruch 12, **dadurch gekennzeichnet, dass** die aus metallischem Material gebildete Bipolarplatte eine oder mehrere zusätzliche Beschichtungen aufweist, die einerseits den elektrischen Flächenwiderstand der Grenzfläche Gasdiffusionsschicht/Bipolarplatte verringern oder aber die chemische und/oder physikalische Resistenz der Bipolarplatte gegen die in Brennstoffzellen vorkommenden bzw. gebildeten Medien erhöhen.

17. Verfahren gemäß Anspruch 12, **dadurch gekennzeichnet, dass** die Bipolarplatte aus einer oder mehreren Einzelplatten aufgebaut ist und Hohlräume für Kühlmittel bzw. zur Zu- und Ableitung von Reaktionsgasen aufweist.

18. Elektrochemischen Zelle, insbesondere Brennstoffzellen-Einzelzelle, enthaltend
(i) mindestens eine protonenleitende Polymerelektrolytmembran (1) oder Elektrolytmatrix (1),
(ii) mindestens eine Katalysatorschicht, die sich jeweils auf beiden Seiten der protonenleitenden Polymerelektrolytmembran oder Elektrolytmatrix befindet,
(iii) mindestens eine elektrisch leitfähige Gasdiffusionsschicht (2), die sich jeweils auf der dem Elektrolyten abgewandten Seite der Katalysatorschicht befindet,
(iv) mindestens eine Bipolarplatte mit integrierten Medienkanälen (3), die sich jeweils auf der zur Katalysatorschicht abgewandten Seiten der Gasdiffusionsschicht befindet,
(v) mindestens ein umlaufendes Konstruktionselement (4; 3a) im Randbereich der Gasdiffusionsschicht zur Bipolarplatte,
**dadurch gekennzeichnet, dass** das Konstruktionselement (4; 3a) im konstruktiven inneren Randbereich übersteht (5) und den äußeren Randbereich der Gasdiffusionsschicht (2) bzw. der mit einer Katalysatorschicht versehenen Gasdiffusionsschicht überlappt und diese in der Aussparung (5), welche die Form eines Hinterschnittes hat und durch das umlaufende Konstruktionselement (4; 3a) und die Bipolarplatte gebildet wird, fixiert.

19. Brennstoffzellen-Stapel enthaltend mehr als eine Brennstoffzellen-Einzelzelle gemäß Anspruch 18.

20. Brennstoffzellen-System enthaltend mindestens eine Brennstoffzellen-Einzelzelle gemäß Anspruch 18 oder einen Brennstoffzellen-Stapel gemäß Anspruch 19.

21. Halbzeuge umfassend:
I) mindestens eine Bipolarplatte mit integrierten Medienkanälen (3) und
II) mindestens eine elektrisch leitfähige Gasdiffusionsschicht (2), welche die Medienkanäle der Bipolarplatte (3) vollständig abdeckt,
III) wobei die Bipolarplatte (3) sich jeweils auf der zur Katalysatorschicht abgewandten Seiten der Gasdiffusionsschicht (2) befindet,
**dadurch gekennzeichnet, dass** die Bipolarplatte (3) ein im Randbereich umlaufendes Konstruktionselement (4; 3a) aufweist, das im konstruktiven inneren Randbereich übersteht (5) und den äußeren Randbereich der Gasdiffusionsschicht (2) bzw. der mit einer Katalysatorschicht versehenen Gasdiffusionsschicht überlappt und diese in der Aussparung (5), welche die Form eines Hinterschnittes hat und durch das umlaufende Konstruktionselement (4; 3a) und die Bipolarplatte gebildet wird, fixiert.

22. Halbzeuge gemäß Anspruch 21, **dadurch gekennzeichnet, dass** der Überstand im konstruktiven inneren Randbereich (5) nicht durchgängig umlaufend ist und Unterbrechungen aufweist.

23. Verwendung der Halbzeuge gemäß Anspruch 21 oder 22 zur Fertigung von elektrochemischen Zellen, insbesondere Brennstoffzellen-Einzelzellen.
